# EUROPEAN PATENT APPLICATION

(11) **EP 4 503 683 A1**
(43) Date of publication of application: **05.02.2025**
(21) Application number: 23778092.9
(22) Date of filing: 27.03.2023
(51) Int. Cl.: H04W 8/08, H04W 76/10

(54) **DATA ACQUISITION METHOD AND APPARATUS, AND NETWORK-SIDE DEVICE**

(30) Priority: 28.03.2022 CN 202210317114
(71) Applicant: VIVO MOBILE COMMUNICATION CO., LTD., Dongguan, Guangdong 523863 (CN)
(72) Inventor: CHONG, Weiwei, Dongguan, Guangdong 523863 (CN); HAN, Lufeng, Dongguan, Guangdong 523863 (CN)
(74) Representative: Lavoix
(86) International application number: PCT/CN2023/084047
(87) International publication number: WO 2023/185725

(57) **Abstract**

This application discloses a data acquisition method, a data acquisition apparatus, and a network-side device, and pertains to the field of wireless communication technologies. The data acquisition method in embodiments of this application includes: transmitting, by a first network element in a first PLMN, a first request to a second network element in a second PLMN, where the first request is used to acquire data generated by a roaming user terminal in the second PLMN and/or a data analytics result generated by the second PLMN for the roaming user terminal, and the roaming user terminal is a user terminal that roams from the first PLMN to the second PLMN or a user terminal that roams from the second PLMN to the first PLMN; and receiving, by the first network element, a first response transmitted by the second network element for the first request.

## Description

### CROSS-REFERENCE TO RELATED APPLICATIONS

This application claims priority to Chinese Patent Application No. 202210317114.3, filed in China on March 28, 2022, which is incorporated herein by reference in its entirety.

### TECHNICAL FIELD

This application pertains to the field of wireless communication technologies, and specifically, relates to a data acquisition method and apparatus, and a network-side device.

### BACKGROUND

In a communication network, some network elements (for example, a network data analytics function (Network Data Analytics Function, NWDAF)) are introduced to perform intelligent data analytics and generate data analytics results for some tasks. The data analytics results may assist devices in and out of the network in policy decision. An objective is to use an artificial intelligence (Artificial Intelligence, AI) method to improve intelligence of policy decision by a device.

For example, the NWDAF (the NWDAF containing (containing) a model training logical function (Model Training Logical Function, MTLF)) may perform artificial intelligence/machine learning (AI/(Machine Learning, ML)) model training based on training data to obtain a corresponding model suitable for an AI task. The NWDAF (the NWDAF containing (containing) an analytics logical function (Analytics Logical Function, AnLF)) performs model inference based on an AI/ML model and inference input data to obtain a data analytics result (or referred to as an inference result, namely, analytics) corresponding to a specific AI inference task. An NWDAF data analytics result consumer (consumer), for example, a policy control function (Policy Control Function, PCF), executes an intelligent policy and charging control (Policy and Charging Control, PCC) policy based on an inference result, namely, analytics, for example, creates an intelligent user camping policy based on a service behavior analytics result for a user to improve service experience of the user. Alternatively, an NWDAF consumer, for example, an access and mobility management function (Access and Mobility Management Function, AMF), performs an intelligent mobility management operation based on an inference result, namely, analytics, for example, intelligently pages a user based on a moving trajectory analytics result for the user to improve paging reachability.

The NWDAF may acquire a large amount of data generated in the network and produce a data analytics result (data analytics). However, the related art involves only data acquisition in one public land mobile network (Public Land Mobile Network, PLMN). To be specific, the NWDAF and a data provider (data provider) belong to one PLMN. How to complete data acquisition across PLMNs is still unclear.

### SUMMARY

Embodiments of this application provide a data acquisition method and apparatus, and a network-side device, to resolve a problem that data cannot be acquired across PLMNs.

According to a first aspect, a data acquisition method is provided. The method includes:
transmitting, by a first network element in a first PLMN, a first request to a second network element in a second PLMN, where the first request is used to acquire data generated by a roaming user terminal in the second PLMN and/or a data analytics result generated by the second PLMN for the roaming user terminal, and the roaming user terminal is a user terminal that roams from the first PLMN to the second PLMN or a user terminal that roams from the second PLMN to the first PLMN; and
receiving, by the first network element, a first response transmitted by the second network element for the first request.

According to a second aspect, a data acquisition method is provided, including:
receiving, by a first interface network element in a first PLMN, a first request transmitted by a first network element in the first PLMN, where the first request is used to acquire data generated by a roaming user terminal in a second PLMN and/or a data analytics result generated by the second PLMN for the roaming user terminal, and the roaming user terminal is a user terminal that roams from the first PLMN to the second PLMN or a user terminal that roams from the second PLMN to the first PLMN;
processing, by the first interface network element, the first request, and transmitting a processed first request to a second network element in the second PLMN;
receiving, by the first interface network element, a first response transmitted by the second network element for the first request; and
transmitting, by the first interface network element, the first response to the first network element.

According to a third aspect, a data acquisition method is provided, including:
receiving, by a second network element in a second PLMN, a first request transmitted by a first network element in a first PLMN, where the first request is used to acquire data generated by a roaming user terminal in the second PLMN and/or a data analytics result generated by the second PLMN for the roaming user terminal, and the roaming user terminal is a user terminal that roams from the first PLMN to the second PLMN or a user terminal that roams from the second PLMN to the first PLMN;
acquiring, by the second network element based on the first request, the data generated by the roaming user terminal in the second PLMN, and/or acquiring the data analytics result generated based on the data generated by the roaming user terminal in the second PLMN; and
transmitting, by the second network element, a first response to the first network element, where the first response includes the acquired data and/or data analytics result.

According to a fourth aspect, a data acquisition method is provided, including:
receiving, by a second interface network element in a second PLMN, a first request transmitted by a first network element in a first PLMN, where the first request is used to acquire data generated by a roaming user terminal in the second PLMN and/or a data analytics result generated by the second PLMN for the roaming user terminal, and the roaming user terminal is a user terminal that roams from the first PLMN to the second PLMN or a user terminal that roams from the second PLMN to the first PLMN;
transmitting, by the second interface network element, the first request to a second network element in the second PLMN;
receiving, by the second interface network element, a first response transmitted by the second network element for the first request; and
transmitting, by the second interface network element, the first response to the first network element.

According to a fifth aspect, a data acquisition apparatus is provided, including:
a transmitting module, configured to transmit a first request to a second network element in a second PLMN, where the first request is used to acquire data generated by a roaming user terminal in the second PLMN and/or a data analytics result generated by the second PLMN for the roaming user terminal, and the roaming user terminal is a user terminal that roams from a first PLMN to the second PLMN or a user terminal that roams from the second PLMN to the first PLMN; and
a receiving module, configured to receive a first response transmitted by the second network element for the first request.

According to a sixth aspect, a data acquisition apparatus is provided, including:
a first receiving module, configured to receive a first request transmitted by a first network element in a first PLMN, where the first request is used to acquire data generated by a roaming user terminal in a second PLMN and/or a data analytics result generated by the second PLMN for the roaming user terminal, and the roaming user terminal is a user terminal that roams from the first PLMN to the second PLMN or a user terminal that roams from the second PLMN to the first PLMN;
a first transmitting module, configured to process the first request, and transmit a processed first request to a second network element in the second PLMN;
a second receiving module, configured to receive a first response transmitted by the second network element for the first request; and
a second transmitting module, configured to transmit the first response to the first network element.

According to a seventh aspect, a data acquisition apparatus is provided, including:
a receiving module, configured to receive a first request transmitted by a first network element in a first PLMN, where the first request is used to acquire data generated by a roaming user terminal in a second PLMN and/or a data analytics result generated by the second PLMN for the roaming user terminal, and the roaming user terminal is a user terminal that roams from the first PLMN to the second PLMN or a user terminal that roams from the second PLMN to the first PLMN;
an acquisition module, configured to acquire, based on the first request, the data generated by the roaming user terminal in the second PLMN, and/or acquire the data analytics result generated based on the data generated by the roaming user terminal in the second PLMN; and
a transmitting module, configured to transmit a first response to the first network element, where the first response includes the acquired data and/or data analytics result.

According to an eighth aspect, a data acquisition apparatus is provided, including:
a first receiving module, configured to receive a first request transmitted by a first network element in a first PLMN, where the first request is used to acquire data generated by a roaming user terminal in a second PLMN and/or a data analytics result generated by the second PLMN for the roaming user terminal, and the roaming user terminal is a user terminal that roams from the first PLMN to the second PLMN or a user terminal that roams from the second PLMN to the first PLMN;
a first transmitting module, configured to transmit the first request to a second network element in the second PLMN;
a second receiving module, configured to receive a first response transmitted by the second network element for the first request; and
a second transmitting module, configured to transmit the first response to the first network element.

According to a ninth aspect, a network-side device is provided, where the terminal includes a processor and a memory, the memory stores a program or instructions capable of running on the processor, and when the program or instructions are executed by the processor, the steps of the method according to the first aspect, the second aspect, the third aspect, or the fourth aspect are implemented.

According to a tenth aspect, a network-side device is provided, including a processor and a communication interface. The communication interface is configured to: transmit a first request to a second network element in a second PLMN, where the first request is used to acquire data generated by a roaming user terminal in the second PLMN and/or a data analytics result generated by the second PLMN for the roaming user terminal, and the roaming user terminal is a user terminal that roams from the first PLMN to the second PLMN or a user terminal that roams from the second PLMN to the first PLMN; and receive a first response transmitted by the second network element for the first request.

According to an eleventh aspect, a network-side device is provided, including a processor and a communication interface. The communication interface is configured to: receive a first request transmitted by a first network element in a first PLMN, where the first request is used to acquire data generated by a roaming user terminal in a second PLMN and/or a data analytics result generated by the second PLMN for the roaming user terminal, and the roaming user terminal is a user terminal that roams from the first PLMN to the second PLMN or a user terminal that roams from the second PLMN to the first PLMN; process the first request, and transmit a processed first request to a second network element in the second PLMN; receive a first response transmitted by the second network element for the first request; and transmit the first response to the first network element.

According to a twelfth aspect, a network-side device is provided, including a processor and a communication interface. The communication interface is configured to receive a first request transmitted by a first network element in a first PLMN, where the first request is used to acquire data generated by a roaming user terminal in a second PLMN and/or a data analytics result generated by the second PLMN for the roaming user terminal, and the roaming user terminal is a user terminal that roams from the first PLMN to the second PLMN or a user terminal that roams from the second PLMN to the first PLMN. The processor is configured to acquire, based on the first request, the data generated by the roaming user terminal in the second PLMN, and/or acquire the data analytics result generated based on the data generated by the roaming user terminal in the second PLMN. The communication interface is configured to transmit a first response to the first network element, where the first response includes the acquired data and/or data analytics result.

According to a thirteenth aspect, a network-side device is provided, including a processor and a communication interface. The communication interface is configured to: receive a first request transmitted by a first network element in a first PLMN, where the first request is used to acquire data generated by a roaming user terminal in a second PLMN and/or a data analytics result generated by the second PLMN for the roaming user terminal, and the roaming user terminal is a user terminal that roams from the first PLMN to the second PLMN or a user terminal that roams from the second PLMN to the first PLMN; transmit the first request to a second network element in the second PLMN; receive a first response transmitted by the second network element for the first request; and transmit the first response to the first network element.

According to a fourteenth aspect, a data acquisition system is provided, including a first network element and a second network element, where the first network element may be configured to perform the steps of the method according to the first aspect, and the second network element may be configured to perform the steps of the method according to the third aspect.

According to a fifteenth aspect, a data acquisition system is provided, including a first network element, a first interface network element, and a second network element, where the first network element may be configured to perform the steps of the method according to the first aspect, the first interface network element may be configured to perform the steps of the method according to the second aspect, and the second network element may be configured to perform the steps of the method according to the third aspect.

According to a sixteenth aspect, a data acquisition system is provided, including a first network element, a second interface network element, and a second network element, where the first network element may be configured to perform the steps of the method according to the first aspect, the second interface network element may be configured to perform the steps of the method according to the fourth aspect, and the second network element may be configured to perform the steps of the method according to the third aspect.

According to a seventeenth aspect, a data acquisition system is provided, including a first network element, a first interface network element, a second interface network element, and a second network element, where the first network element may be configured to perform the steps of the method according to the first aspect, the first interface network element may be configured to perform the steps of the method according to the second aspect, the second interface network element may be configured to perform the steps of the method according to the fourth aspect, and the second network element may be configured to perform the steps of the method according to the third aspect.

According to an eighteenth aspect, a readable storage medium is provided, where the readable storage medium stores a program or instructions, and when the program or instructions are executed by a processor, the steps of the method according to the first aspect, the second aspect, the third aspect, or the fourth aspect are implemented.

According to a nineteenth aspect, a chip is provided, where the chip includes a processor and a communication interface, the communication interface is coupled to the processor, and the processor is configured to run a program or instructions to implement the method according to the first aspect, the second aspect, the third aspect, or the fourth aspect.

According to a twentieth aspect, a computer program or program product is provided, where the computer program or program product is stored in a storage medium, and the computer program or program product is executed by at least one processor to implement the steps of the method according to the first aspect, the second aspect, the third aspect, or the fourth aspect.

In embodiments of this application, data or a data analytics result of a roaming user terminal can be acquired across PLMNs, to perform policy optimization on mobility management (Mobility Management, MM) and/or session management (Session Management, SM) for the roaming user terminal.

### BRIEF DESCRIPTION OF THE DRAWINGS

FIG. 1 is a block diagram of a wireless communication system to which embodiments of this application are applicable;
FIG. 2 is a first schematic flowchart of a data acquisition method according to an embodiment of this application;
FIG. 3 is a second schematic flowchart of a data acquisition method according to an embodiment of this application;
FIG. 4 is a third schematic flowchart of a data acquisition method according to an embodiment of this application;
FIG. 5 is a fourth schematic flowchart of a data acquisition method according to an embodiment of this application;
FIG. 6 is a schematic flowchart of a data acquisition method according to Embodiment 1 of this application;
FIG. 7 is a schematic flowchart of a data acquisition method according to Embodiment 2 of this application;
FIG. 8 is a schematic flowchart of a data acquisition method according to Embodiment 3 of this application;
FIG. 9 is a schematic flowchart of a data acquisition method according to Embodiment 4 of this application;
FIG. 10 is a first schematic structural diagram of a data acquisition apparatus according to an embodiment of this application;
FIG. 11 is a second schematic structural diagram of a data acquisition apparatus according to an embodiment of this application;
FIG. 12 is a third schematic structural diagram of a data acquisition apparatus according to an embodiment of this application;
FIG. 13 is a fourth schematic structural diagram of a data acquisition apparatus according to an embodiment of this application;
FIG. 14 is a first schematic structural diagram of a network-side device according to an embodiment of this application; and
FIG. 15 is a second schematic structural diagram of a network-side device according to an embodiment of this application.

### DETAILED DESCRIPTION

The following clearly describes technical solutions in embodiments of this application with reference to accompanying drawings in embodiments of this application. Clearly, the described embodiments are some but not all of embodiments of this application. All other embodiments obtained by a person of ordinary skill in the art based on embodiments of this application shall fall within the protection scope of this application.

The terms "first", "second", and the like in this specification and the claims of this application are used to distinguish between similar objects rather than to describe a specific order or sequence. It should be understood that terms used in this way are interchangeable in appropriate circumstances, so that embodiments of this application can be implemented in an order other than the order illustrated or described herein. In addition, the objects distinguished by "first" and "second" usually belong to one category, and the number of objects is not limited. For example, there may be one or more first objects. In addition, in this specification and the claims, "and/or" represents at least one of connected objects, and the character "/" typically represents an "or" relationship between the associated objects.

It should be noted that technologies described in embodiments of this application are not limited to a long term evolution (Long Term Evolution, LTE)/LTE-advanced (LTE-Advanced, LTE-A) system, and may be further used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in embodiments of this application are usually used interchangeably, and the technologies described herein may be used in the aforementioned systems and radio technologies, and may also be used in other systems and radio technologies. In the following descriptions, a new radio (New Radio, NR) system is described for an illustration purpose, and NR terms are used in most of the following descriptions. However, these technologies may also be applied to applications other than an NR system application, for example, a 6th generation (6th Generation, 6G) communication system.

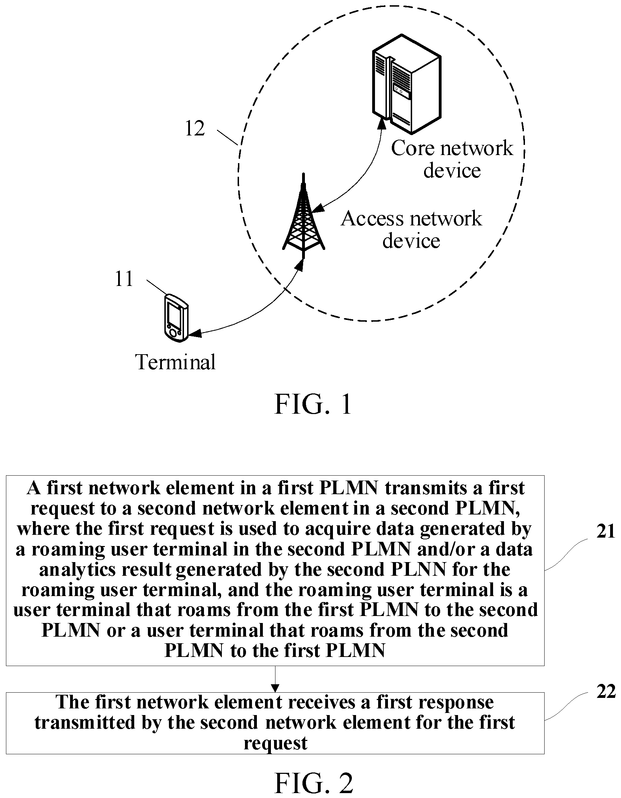

FIG. 1 is a block diagram of a wireless communication system to which embodiments of this application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart household (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart headset, smart glasses, smart jewelry (a smart bangle, a smart bracelet, a smart ring, a smart necklace, a smart anklet, a smart ankle chain, or the like), a smart wristband, smart clothing, or the like. It should be noted that a specific type of the terminal 11 is not limited in embodiments of this application. The network-side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the art. Provided that the same technical effect is achieved, the base station is not limited to a specific technical term. It should be noted that the base station in the NR system is used only as an example for description in embodiments of this application, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that the core network device in the NR system is used only as an example for description in embodiments of this application, but a specific type of the core network device is not limited.

The following describes in detail a data acquisition method, a data acquisition apparatus, and a network-side device provided in embodiments of this application with reference to accompanying drawings and by using some embodiments and application scenarios thereof.

As shown in FIG. 2, an embodiment of this application provides a data acquisition method, including the following steps:

Step 21: A first network element in a first PLMN transmits a first request to a second network element in a second PLMN, where the first request is used to acquire data generated by a roaming user terminal in the second PLMN and/or a data analytics result generated by the second PLMN for the roaming user terminal, and the roaming user terminal is a user terminal that roams from the first PLMN to the second PLMN or a user terminal that roams from the second PLMN to the first PLMN.

When the first request is used to acquire the data generated by the roaming user terminal in the second PLMN, the first network element may be an NWDAF in the first PLMN, and the second network element may be a data provider (data provider) in the second PLMN.

When the first request is used to acquire the data analytics result generated by the second PLMN for the roaming user terminal, the first network element may be a data analytics result consumer (consumer) in the first PLMN, and the second network element may be an NWDAF in the second PLMN. Alternatively, the first network element may be an NWDAF in the first PLMN, and the second network element may be an NWDAF or a network element (for example, an ADRF) that stores a data analytics result in the second PLMN.

To be specific, in some embodiments, the first PLMN is a home PLMN of the roaming user terminal (namely, Home PLMN, where the roaming user terminal comes from the first PLMN through roaming), and the second PLMN is a visited PLMN of the roaming user terminal (namely, Visited PLMN, where the roaming user terminal roams to the second PLMN). The home PLMN may acquire, from the visited PLMN, data generated by the roaming user terminal in the visited PLMN or a data analytics result generated by the visited PLMN for the roaming user terminal.

In some other embodiments, the first PLMN is a visited PLMN of the roaming user terminal, and the second PLMN is a home PLMN of the roaming user terminal. The visited PLMN may acquire, from the home PLMN, data generated by the roaming user terminal in the home PLMN or a data analytics result generated by the home PLMN for the roaming user terminal.

In this embodiment of this application, the roaming user terminal may be all or some of roaming user terminals that roam from the home PLMN to the visited PLMN.

Step 22: The first network element receives a first response transmitted by the second network element for the first request.

In this embodiment of this application, the data or the data analytics result of the roaming user terminal can be acquired across PLMNs, to perform policy optimization on mobility management (Mobility Management, MM) and/or session management (Session Management, SM) for the roaming user terminal.

In this embodiment of this application, optionally, the first network element may be a network data analytics function (Network Data Analytics Function, NWDAF), an SMF, an AMF, or the like, and certainly, may alternatively be another network element.

For example, the NWDAF in the first PLMN is to generate a data analytics result for one or more roaming user terminals, and needs to acquire, from an NF in the second PLMN, data generated by the roaming user terminal in the second PLMN (for example, acquire location information of the roaming user terminal in the second PLMN from an AMF in the second PLMN).

For another example, the first network element in the first PLMN acquires a data analytics result for one or more roaming user terminals from the NWDAF (namely, the second network element) in the second PLMN, so that the first network element executes a corresponding policy. For example, the NWDAF in the second PLMN generates DN performance analytics (a data network performance analytics result) for the roaming user terminal to describe service experience analytics results obtained after services are distributed to different DNs. After the results are obtained by the first network element, for example, an SMF, the SMF may select a session UPF and a DN for the roaming user terminal, to select an appropriate data path.

In this embodiment of this application, optionally, the second network element may be one or more of a network function (Network Function, NF), an application function (Application Function, AF), an operation, administration, and maintenance (Operation Administration Maintenance, OAM), a radio access network (Radio Access Network, RAN), UE, an ADRF, an NWDAF, and the like. In this embodiment of this application, when the second network element includes an NWDAF, a data analytics result (data analytics) generated by the NWDAF may be provided for the first network element.

In this embodiment of this application, optionally, the data analytics result may be a historical data analytics result or an instantaneously generated data analytics result.

In this embodiment of this application, optionally, the first request includes at least one of the following information:
a first roaming indication, used to indicate that the first request is specific to the roaming user terminal, or indicate that the first request is specific to the user terminal that roams from the first PLMN to the second PLMN or the user terminal that roams from the second PLMN to the first PLMN;
an identifier of the second PLMN, used to indicate a data provider network, where the data provider network is a network for providing data generated by the roaming user terminal in the network and/or a data analytics result for the roaming user terminal;
an identifier of a second area in the second PLMN, used to indicate that data and/or a data analytics result corresponding to the roaming user terminal in the second area need to be acquired;
an identifier of the first PLMN, used to indicate a data requester network, where the data requester network is a network for requesting data generated by the roaming user terminal in another network and/or a data analytics result for the roaming user terminal; and
an identifier of a first area in the first PLMN, used to indicate that the roaming user terminal is located in the first area or comes from the first area through roaming, where the identifier of the first area in the first PLMN is used to indicate a target roaming user terminal object corresponding to data and/or a data analytics result that need to be acquired.

The foregoing information is carried, so that the second PLMN can conveniently determine information about a roaming user terminal corresponding to data and/or a data analytics result that need to be provided.

In this embodiment of this application, optionally, the first request further includes at least one of the following information:
information about a target data type, used to indicate a type of data that needs to be acquired and/or a type of a data analytics result that needs to be acquired;
information about a target time period, used to indicate that data that needs to be acquired is data and/or a data analytics result within the target time period; and
user list information, used to indicate the roaming user terminal.

The foregoing information is carried, so that the second PLMN can conveniently determine information about a roaming user terminal corresponding to data and/or a data analytics result that need to be provided, a type of the data that needs to be provided, and/or a time period within which data needs to be provided.

In this embodiment of this application, optionally, the information about the target data type may include an event identifier (event ID), used to indicate the type of the data that needs to be acquired; or the information about the target data type may include an analytics identifier (analytics ID), used to indicate the type of the data analytics result that needs to be acquired.

In this embodiment of this application, optionally, that a first network element in a first PLMN transmits a first request to a second network element in a second PLMN includes: The first network element transmits the first request to the second network element through a first interface network element.

Optionally, the first interface network element is an interface network element for transmitting data between roaming networks, and may be a data collection coordination function (Data Collection Coordination Function, DCCF) or an analytics data repository function (Analytics Data Repository Function, ADRF), or certainly may be another network element. This is not limited in this application.

Optionally, if the first network element transmits the first request to the DCCF, the first request may be Ndccf_DataManagement_Subscribe; or if the first request is transmitted to the ADRF, the first request may be Nadrf_DataManagement_RetrievalRequest or Nadrf_DataManagement_RetrievalSubscribe.

In this embodiment of this application, different second PLMNs may alternatively correspond to different first interface network elements. In other words, different first interface network elements are used for different second PLMNs. Optionally, before the first network element transmits the first request to the second network element through the first interface network element, the method further includes: The first network element determines, based on the identifier of the first PLMN and/or the identifier of the second PLMN, the first interface network element that is in the first PLMN and that corresponds to the second PLMN.

In this embodiment of this application, optionally, each second PLMN corresponds to one first interface network element. Optionally, each first interface network element may correspond to one or more second PLMNs.

In this embodiment of this application, optionally, that the first network element determines, based on the identifier of the first PLMN and/or the identifier of the second PLMN, the first interface network element that is in the first PLMN and that corresponds to the second PLMN includes: The first network element queries, based on the identifier of the first PLMN and/or the identifier of the second PLMN, a UDM network element or an NRF network element for the first interface network element that is in the first PLMN and that corresponds to the second PLMN. For example, the first network element uses Nnrf_NFDiscovery_ to query the NRF for the first interface network element, where the Nnrf_NFDiscovery_ carries the identifier of the first PLMN and/or the identifier of the second PLMN. It should be noted that, in this embodiment, the first interface network element needs to pre-register, with the UDM network element or the NRF network element, a second PLMN corresponding to the first interface network element, for example, use Nnrf_NFManagement_NFRegister for registration.

In this embodiment of this application, optionally, the first response includes at least one of the following information:
a second roaming indication, used to indicate that the first response is specific to the roaming terminal, or indicate that the first response is specific to the user terminal that roams from the first PLMN to the second PLMN or the user terminal that roams from the second PLMN to the first PLMN;
an identifier of the second PLMN, used to indicate a data provider network;
an identifier of a second area in the second PLMN, used to indicate that data and/or a data analytics result corresponding to the roaming user terminal in the second area are to be acquired;
an identifier of the first PLMN, used to indicate a data requester network; and
an identifier of a first area in the first PLMN, used to indicate that the roaming user terminal is located in the first area or comes from the first area through roaming.

The foregoing information is carried in the first response, so that the first network element can quickly and conveniently learn of a roaming terminal to which the first response is specific, and further learn of a specific type of roaming terminal to which the first response is specific.

In this embodiment of this application, optionally, the first response further includes at least one of the following information:
a target data type, used to indicate a type of data to be acquired;
a target time period, used to indicate that data to be acquired is data within the target time period; and
a user list, used to indicate the roaming user terminal.

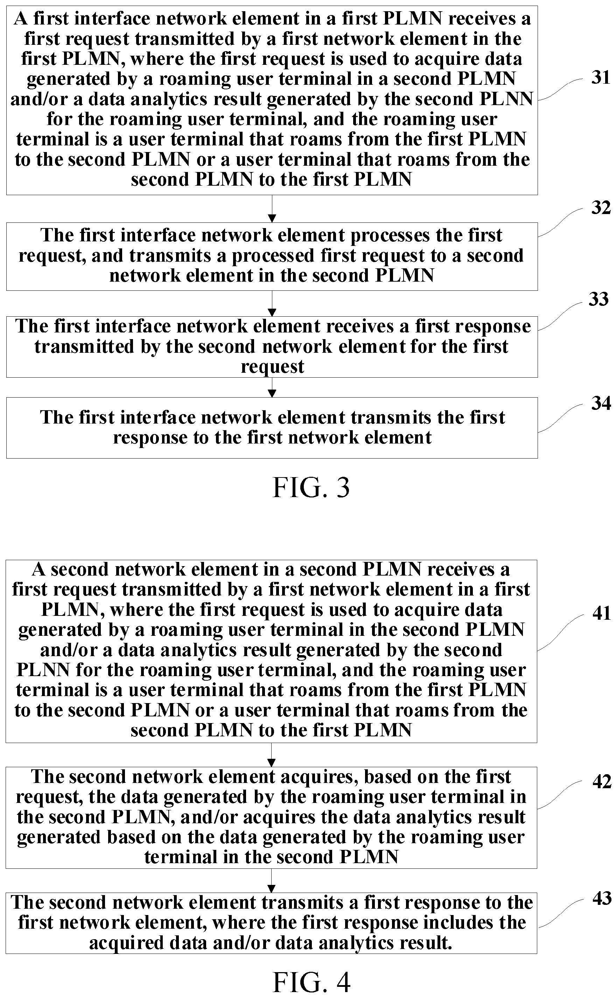

As shown in FIG. 3, an embodiment of this application further provides a data acquisition method, including the following steps:

Step 31: A first interface network element in a first PLMN receives a first request transmitted by a first network element in the first PLMN, where the first request is used to acquire data generated by a roaming user terminal in a second PLMN and/or a data analytics result generated by the second PLMN for the roaming user terminal, and the roaming user terminal is a user terminal that roams from the first PLMN to the second PLMN or a user terminal that roams from the second PLMN to the first PLMN.

The first interface network element is an interface network element for transmitting data between roaming networks.

Step 32: The first interface network element processes the first request, and transmits a processed first request to a second network element in the second PLMN.

In this embodiment of this application, optionally, the processing the first request may include only forwarding, or may include forwarding and other processing.

Step 33: The first interface network element receives a first response transmitted by the second network element for the first request.

Step 34: The first interface network element transmits the first response to the first network element.

In this embodiment of this application, the first interface network element serves as a data proxy network element for transmitting data between roaming networks, so that different networks can smoothly communicate with each other.

In this embodiment of this application, optionally, the first interface network element may be a data collection coordination function (Data Collection Coordination Function, DCCF), an analytics data repository function (Analytics Data Repository Function, ADRF), a security edge protection proxy (Security Edge Protection Proxy, SEPP), or an interface NWDAF, or certainly, may be another network element. This is not limited in this application.

In this embodiment of this application, optionally, the second network element may be one or more of a network function (Network Function, NF), an application function (Application Function, AF), an operation, administration, and maintenance (Operation Administration Maintenance, OAM), a radio access network (Radio Access Network, RAN), UE, an ADRF, an NWDAF, and the like. In this embodiment of this application, when the second network element includes an NWDAF, a data analytics result (data analytics) generated by the NWDAF may be provided for the first network element.

In this embodiment of this application, optionally, the first request includes at least one of the following information:
a first roaming indication, used to indicate that the first request is specific to the roaming user terminal, or indicate that the first request is specific to the user terminal that roams from the first PLMN to the second PLMN or the user terminal that roams from the second PLMN to the first PLMN;
an identifier of the second PLMN, used to indicate a data provider network;
an identifier of a second area in the second PLMN, used to indicate that data and/or a data analytics result corresponding to the roaming user terminal in the second area need to be acquired;
an identifier of the first PLMN, used to indicate a data requester network; and
an identifier of a first area in the first PLMN, used to indicate that the roaming user terminal is located in the first area or comes from the first area through roaming.

In this embodiment of this application, optionally, that the first interface network element processes the first request includes:

The first interface network element determines user list information based on the identifier of the first area in the first PLMN, where the user list information is used to indicate the roaming user terminal, and the roaming user terminal is located in the first area or comes from the first area through roaming; and
the first interface network element adds the user list information to the first request to obtain the processed first request.

In this embodiment of this application, the first interface network element may query an AMF corresponding to the first area in the first PLMN for the user list information in the first area in the first PLMN.

In this embodiment of this application, optionally, when the first PLMN is a visited PLMN of the roaming user terminal, the first interface network element queries an AMF in the first PLMN to learn of a user terminal that is in the first area and that comes from the second PLMN, and treats the learned user terminal as the roaming user terminal;
or
when the first PLMN is a home PLMN of the roaming user terminal, the first interface network element queries a UDM in the first PLMN to learn of a user terminal that roams from the first area to the second PLMN, and treats the learned user terminal as the roaming user terminal.

By processing the first request, the first interface network element may determine a roaming user terminal corresponding to data and/or a data analytics result that need to be provided, add the roaming user terminal to the first request, and forward the first request to the second network element, so that the second network element can quickly learn of the roaming user terminal corresponding to the data and/or the data analytics result that need to be provided.

In this embodiment of this application, optionally, before the transmitting a processed first request to a second network element in the second PLMN, the method further includes:

The first interface network element determines a second interface network element in the second PLMN.

The transmitting a processed first request to a second network element in the second PLMN includes:
The first interface network element transmits the processed first request to the second network element through the second interface network element.

In this embodiment of this application, optionally, that the first interface network element determines a second interface network element in the second PLMN includes: The first interface network element determines, based on the identifier of the first PLMN and/or the identifier of the second PLMN, the second interface network element that is in the second PLMN and that corresponds to the first PLMN.

In this embodiment of this application, optionally, each first PLMN corresponds to one second interface network element. Optionally, each second interface network element may correspond to one or more first PLMNs.

In this embodiment of this application, optionally, that the first interface network element determines, based on the identifier of the first PLMN and/or the identifier of the second PLMN, the second interface network element that is in the second PLMN and that corresponds to the first PLMN includes: The first interface network element queries, based on the identifier of the first PLMN and/or the identifier of the second PLMN, a UDM network element or an NRF network element for the second interface network element that is in the second PLMN and that corresponds to the first PLMN.

Optionally, the first interface network element may query the UDM network element or the NRF network element by using an Nnrf_NFDiscovery_request message to learn of the second interface network element.

As shown in FIG. 4, an embodiment of this application further provides a data acquisition method, including the following steps:
Step 41: A second network element in a second PLMN receives a first request transmitted by a first network element in a first PLMN, where the first request is used to acquire data generated by a roaming user terminal in the second PLMN and/or a data analytics result generated by the second PLMN for the roaming user terminal, and the roaming user terminal is a user terminal that roams from the first PLMN to the second PLMN or a user terminal that roams from the second PLMN to the first PLMN.

In this embodiment of this application, optionally, the second network element may be one or more of a network function (Network Function, NF), an application function (Application Function, AF), an operation, administration, and maintenance (Operation Administration Maintenance, OAM), a radio access network (Radio Access Network, RAN), UE, an ADRF, an NWDAF, and the like.

When the first request is used to acquire the data generated by the roaming user terminal in the second PLMN, the first network element may be an NWDAF in the first PLMN, and the second network element may be a data provider (data provider), for example, an NF, an AF, an OAM, a RAN, and/or UE, in the second PLMN.

When the first request is used to acquire the data analytics result generated by the second PLMN for the roaming user terminal, the first network element may be a data analytics result consumer (consumer) in the first PLMN, and the second network element may be an NWDAF in the second PLMN. Alternatively, the first network element may be an NWDAF in the first PLMN, and the second network element may be an NWDAF or a network element (for example, an ADRF) that stores a data analytics result in the second PLMN.

Step 42: The second network element acquires, based on the first request, the data generated by the roaming user terminal in the second PLMN, and/or acquires the data analytics result generated based on the data generated by the roaming user terminal in the second PLMN.

Step 43: The second network element transmits a first response to the first network element, where the first response includes the acquired data and/or data analytics result.

In this embodiment of this application, the data or the data analytics result of the roaming user terminal can be acquired across PLMNs, to perform policy optimization on mobility management and/or session management for the roaming user terminal.

In this embodiment of this application, optionally, the first request includes at least one of the following information:
a first roaming indication, used to indicate that the first request is specific to the roaming user terminal, or indicate that the first request is specific to the user terminal that roams from the first PLMN to the second PLMN or the user terminal that roams from the second PLMN to the first PLMN;
an identifier of the second PLMN, used to indicate a data provider network;
an identifier of a second area in the second PLMN, used to indicate that data and/or a data analytics result corresponding to the roaming user terminal in the second area need to be acquired;
an identifier of the first PLMN, used to indicate a data requester network; and
an identifier of a first area in the first PLMN, used to indicate that the roaming user terminal is located in the first area or comes from the first area through roaming.

In this embodiment of this application, optionally, the first request further includes at least one of the following information:
a target data type, used to indicate a type of data that needs to be acquired and/or a type of a data analytics result that needs to be acquired;
a target time period, used to indicate that data that needs to be acquired is data and/or a data analytics result within the target time period; and
a user list, used to indicate the roaming user terminal.

In this embodiment of this application, optionally, that the second network element acquires, based on the first request, the data generated by the roaming user terminal in the second PLMN, and/or acquires the data analytics result generated based on the data generated by the roaming user terminal in the second PLMN includes:

The second network element determines, based on the first roaming indication in the first request, that the first request is specific to the roaming user terminal; or the second network element determines, based on the first roaming indication in the first request, that the roaming user terminal is a user terminal that roams from the first PLMN to the second PLMN or a user terminal that roams from the second PLMN to the first PLMN.

In this embodiment of this application, optionally, that the second network element acquires, based on the first request, the data generated by the roaming user terminal in the second PLMN, and/or acquires the data analytics result generated based on the data generated by the roaming user terminal in the second PLMN further includes:

In the case of determining that the roaming user terminal is a user terminal that roams from the first PLMN to the second PLMN (to be specific, the first PLMN is a home (Home) PLMN, and the second PLMN is a visited (Visited) PLMN), the second network element determines, based on a PLMN identifier included in an identifier of a user terminal, whether the user terminal comes from the first PLMN; and by treating a user terminal that comes from the first PLMN as the roaming user terminal, acquires the data generated by the roaming user terminal in the second PLMN, and/or acquires the data analytics result generated based on the data generated by the roaming user terminal in the second PLMN.

In this embodiment of this application, the identifier of the user terminal may be an international mobile subscriber identification (International Mobile Subscriber Identification, IMSI), a subscription permanent identifier (Subscription Permanent Identifier, SUPI), or the like.

In this embodiment of this application, optionally, that the second network element acquires, based on the first request, the data generated by the roaming user terminal in the second PLMN, and/or acquires the data analytics result generated based on the data generated by the roaming user terminal in the second PLMN further includes:

In the case of determining that the roaming user terminal is a user terminal that roams from the first PLMN to the second PLMN (to be specific, the first PLMN is a home (Home) PLMN, and the second PLMN is a visited (Visited) PLMN), the second network element determines, based on a PLMN identifier included in an identifier of a user terminal, whether the user terminal comes from the first PLMN;
if the user terminal comes from the first PLMN, the second network element queries a UDM in the first PLMN for home area information of the user terminal;
the second network element determines, based on the home area information, whether the user terminal comes from the first area in the first PLMN; and
by treating a user terminal that comes from the first area in the first PLMN as the roaming user terminal, the second network element acquires the data generated by the roaming user terminal in the second PLMN, and/or acquires the data analytics result generated based on the data generated by the roaming user terminal in the second PLMN.

In this embodiment of this application, optionally, that the second network element acquires, based on the first request, the data generated by the roaming user terminal in the second PLMN, and/or acquires the data analytics result generated based on the data generated by the roaming user terminal in the second PLMN further includes:
in the case of determining that the roaming user terminal is a user terminal that roams from the second PLMN to the first PLMN, querying, by the second network element, a UDM of the second PLMN to learn of a user terminal that is located in the first PLMN or the first area in the first PLMN; and
by treating the user terminal as the roaming user terminal, acquiring, by the second network element, the data generated by the roaming user terminal in the second PLMN, and/or acquiring the data analytics result generated based on the data generated by the roaming user terminal in the second PLMN.

In this embodiment of this application, optionally, that the second network element acquires, based on the first request, the data generated by the roaming user terminal in the second PLMN, and/or acquires the data analytics result generated based on the data generated by the roaming user terminal in the second PLMN further includes at least one of the following:

The second network element acquires, based on the information about the target data type in the first request, data of the roaming user terminal that belongs to the target data type;
the second network element acquires, based on the information about the target time period in the first request, data generated by the roaming user terminal within the target time period; and
the second network element determines the roaming user terminal based on the user list information in the first request.

In this embodiment of this application, optionally, the first response includes at least one of the following information:
a second roaming indication, used to indicate that the first response is specific to the roaming terminal, or indicate that the first response is specific to the user terminal that roams from the first PLMN to the second PLMN or the user terminal that roams from the second PLMN to the first PLMN;
an identifier of the second PLMN, used to indicate a data provider network;
an identifier of a second area in the second PLMN, used to indicate that data and/or a data analytics result corresponding to the roaming user terminal in the second area are to be acquired;
an identifier of the first PLMN, used to indicate a data requester network; and
an identifier of a first area in the first PLMN, used to indicate that the roaming user terminal is located in the first area or comes from the first area through roaming.

In this embodiment of this application, optionally, the first response further includes at least one of the following information:
a target data type, used to indicate a type of data to be acquired;
a target time period, used to indicate that data to be acquired is data within the target time period; and
a user list, used to indicate the roaming user terminal.

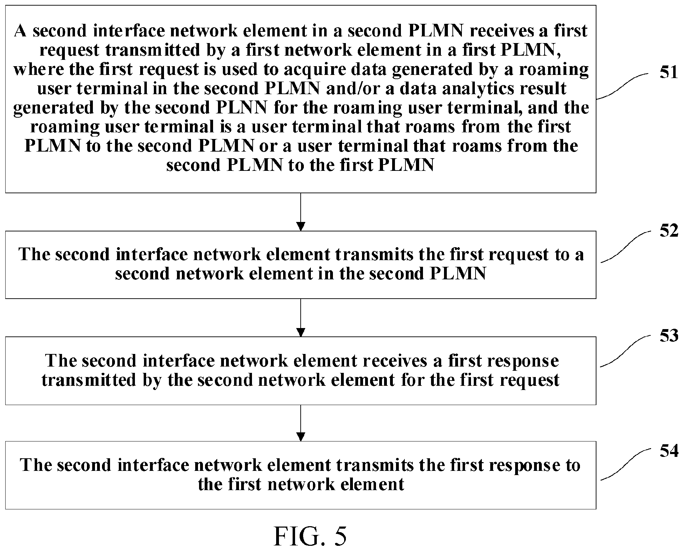

As shown in FIG. 5, an embodiment of this application further provides a data acquisition method, including the following steps:

Step 51: A second interface network element in a second PLMN receives a first request transmitted by a first network element in a first PLMN, where the first request is used to acquire data generated by a roaming user terminal in the second PLMN and/or a data analytics result generated by the second PLMN for the roaming user terminal, and the roaming user terminal is a user terminal that roams from the first PLMN to the second PLMN or a user terminal that roams from the second PLMN to the first PLMN.

Step 52: The second interface network element transmits the first request to a second network element in the second PLMN.

Step 53: The second interface network element receives a first response transmitted by the second network element for the first request.

Step 54: The second interface network element transmits the first response to the first network element.

In this embodiment of this application, the second interface network element serves as a data proxy network element for transmitting data between roaming networks, so that different networks can smoothly communicate with each other.

In this embodiment of this application, optionally, the second interface network element may be a data collection coordination function (Data Collection Coordination Function, DCCF), an analytics data repository function (Analytics Data Repository Function, ADRF), a security edge protection proxy (Security Edge Protection Proxy, SEPP), or an interface NWDAF, or certainly, may be another network element. This is not limited in this application.

In this embodiment of this application, optionally, the second network element may be one or more of a network function (Network Function, NF), an application function (Application Function, AF), an operation, administration, and maintenance (Operation Administration Maintenance, OAM), a radio access network (Radio Access Network, RAN), UE, an ADRF, an NWDAF, and the like. In this embodiment of this application, when the second network element includes an NWDAF, a data analytics result (data analytics) generated by the NWDAF may be provided for the first network element.

In this embodiment of this application, the second interface network element may request the data analytics result from the NWDAF by using Nnwdaf_DataManagement_Subscribe, Nnwdaf_AnalyticsSubscription_Subscribe, or Nnwdaf_AnalyticsInfo_Request.

In this embodiment of this application, during data acquisition, the second interface network element may acquire data from an NF by using Nnf_EventExposure_Subscribe.

When the first request is used to acquire the data generated by the roaming user terminal in the second PLMN, the first network element may be an NWDAF in the first PLMN, and the second network element may be a data provider (data provider), for example, an NF, an AF, an OAM, a RAN, and/or UE, in the second PLMN.

When the first request is used to acquire the data analytics result generated by the second PLMN for the roaming user terminal, the first network element may be a data analytics result consumer (consumer) in the first PLMN, and the second network element may be an NWDAF in the second PLMN. Alternatively, the first network element may be an NWDAF in the first PLMN, and the second network element may be an NWDAF or a network element (for example, an ADRF) that stores a data analytics result in the second PLMN.

In this embodiment of this application, optionally, the first request includes at least one of the following information:
a first roaming indication, used to indicate that the first request is specific to the roaming user terminal, or indicate that the first request is specific to the user terminal that roams from the first PLMN to the second PLMN or the user terminal that roams from the second PLMN to the first PLMN;
an identifier of the second PLMN, used to indicate a data provider network;
an identifier of a second area in the second PLMN, used to indicate that data and/or a data analytics result corresponding to the roaming user terminal in the second area need to be acquired;
an identifier of the first PLMN, used to indicate a data requester network; and
an identifier of a first area in the first PLMN, used to indicate that the roaming user terminal is located in the first area or comes from the first area through roaming.

In this embodiment of this application, optionally, the first request further includes at least one of the following information:
information about a target data type, used to indicate a type of data that needs to be acquired and/or a type of a data analytics result that needs to be acquired;
information about a target time period, used to indicate that data that needs to be acquired is data and/or a data analytics result within the target time period; and
user list information, used to indicate the roaming user terminal.

In this embodiment of this application, optionally, before the second interface network element transmits the first request to the second network element in the second PLMN, the method further includes: The second interface network element determines authorization information of the first network element based on the first request, where the authorization information is used to indicate that the first network element is authorized to acquire the data generated by the roaming user terminal in the second PLMN and/or the data analytics result generated by the second PLMN for the roaming user terminal.

Optionally, the authorization information includes one or more of the following information:
The first PLMN is authorized to acquire data and/or a data analytics result in the second PLMN.

A specific first network element and/or first interface network element in the first PLMN is authorized to acquire data and/or a data analytics result in the second PLMN.

A specific first network element and/or first interface network element in the first PLMN is authorized to acquire data and/or a data analytics result of a specific second interface network element, second network element, or second area in the second PLMN.

The first PLMN is authorized to acquire specific data (identified by an event ID) and/or a specific data analytics result (identified by an analytics ID) in the second PLMN.

In this embodiment of this application, optionally, if the second interface network element determines, based on the first request, that the first network element is not authorized to acquire the data generated by the roaming user terminal in the second PLMN and/or the data analytics result generated by the second PLMN for the roaming user terminal, the second interface network element may not transmit the first request to the second network element, and optionally, may further transmit a reject request to the first network element, where a reject cause value may be: having no permission to acquire the data generated by the roaming user terminal in the second PLMN and/or the data analytics result generated by the second PLMN for the roaming user terminal.

In this embodiment of this application, the second interface network element may query another network element for whether the first network element is authorized, or may determine, based on a local policy of the second interface network element or an operator-configured policy, whether the first network element is authorized. The local policy or the operator-configured policy may be, for example, a roaming agreement signed between two PLMNs. Information, such as a scope and/or a type of data and/or data analytics results allowed to be acquired between the two PLMNs, is signed in the roaming agreement.

In some embodiments, optionally, that the second interface network element determines authorization information of the first network element based on the first request includes:
The second interface network element determines the authorization information of the first network element based on the identifier of the first PLMN and/or the identifier of the first area in the first PLMN in the first request.

Further, optionally, that the second interface network element determines the authorization information of the first network element based on the identifier of the first PLMN and/or the identifier of the first area in the first PLMN in the first request includes:
The second interface network element queries a UDM, a network exposure function (NEF), or a security edge protection proxy (SEPP) of the second PLMN for data acquisition authorization information corresponding to the identifier of the first PLMN and/or the identifier of the first area in the first PLMN, where the data acquisition authorization information is used to indicate that the first PLMN and/or a network element of the first PLMN is allowed to acquire the data generated by the roaming user terminal in the second PLMN and/or the data analytics result generated by the second PLMN for the roaming user terminal; and
the second interface network element determines the authorization information of the first network element based on the data acquisition authorization information.

Optionally, before the second interface network element transmits the first request to the second network element in the second PLMN, the method further includes: The second interface network element determines the second network element based on the identifier of the second area in the second PLMN and/or the information about the target data type in the first request.

For example, if a to-be-acquired event ID (target data type) is a UE location, it can be determined that a type of the second network element is an AMF type. For another example, based on an analytics ID = UE mobility (mobility), a V-NWDAF for generating the UE mobility analytics in a visited PLMN (Visited PLMN, V-PLMN) is determined.

For example, based on a target area (the identifier of the second area in the second PLMN) = an AOI in a V-PLMN (for example, a tracking area 1 (TA 1) in the V-PLMN), the second interface network element determines that an AMF instance (instance) serving the AOI in the V-PLMN is an AMF instance 1.

The following describes the data acquisition method in embodiments of this application with reference to specific application scenarios.

### Embodiment 1 of this application:

Application scenario: An NWDAF (namely, the foregoing first network element, also referred to as an H-NWDAF) in an H-PLMN (home PLMN, namely, the foregoing first PLMN) is to generate a data analytics result for one or more roaming user terminals, and needs to acquire, from an NF in a V-PLMN (visited PLMN, namely, the foregoing second PLMN), data generated by the roaming user terminal in the V-PLMN (for example, acquire location information of the roaming user terminal in the V-PLMN from an AMF in the V-PLMN).

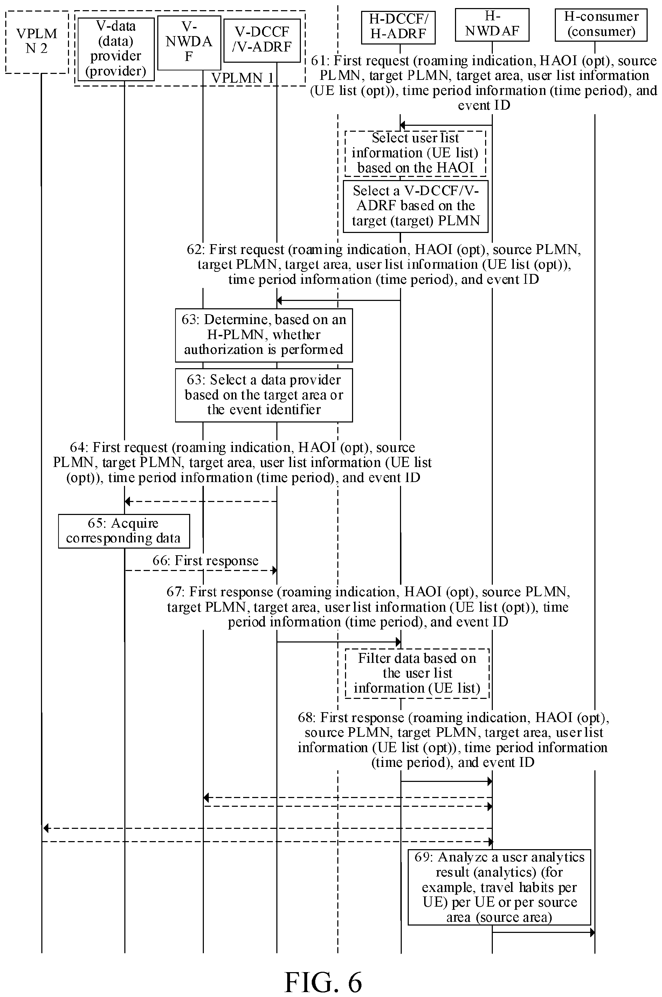

As shown in FIG. 6, a data acquisition method in this embodiment of this application includes the following steps:
Step 61: The H-NWDAF determines that data generated by the roaming user terminal in the V-PLMN needs to be acquired. In this case, the H-NWDAF transmits a first request to a first interface network element (for example, a data collection coordination function (Data Collection Coordination Function, H-DCCF) or an analytics data repository function (Analytics Data Repository Function, H-ADRF)), where the first request includes at least one of the following information:
a roaming indication (namely, the foregoing first roaming indication), used to indicate that the first request is specific to the roaming user terminal, or indicate that the first request is specific to a user terminal that roams from the H-PLMN to the V-PLMN;
a visited/target PLMN (namely, the foregoing identifier of the second PLMN), used to indicate a data provider network;
a target area in the V-PLMN (namely, the foregoing identifier of the second area in the second PLMN), used to indicate that data corresponding to the target area (namely, the foregoing second area) needs to be acquired;
a home/source PLMN (namely, the foregoing identifier of the first PLMN), used to indicate a data requester network; and
a source area in the H-PLMN (namely, the foregoing identifier of the first area in the first PLMN, corresponding to an HAOI (area of interest in H-PLMN) in the figure), used to indicate that the roaming user terminal comes from the source area (namely, the foregoing first area) through roaming.

Optionally, if the H-NWDAF transmits the first request to the H-DCCF, the first request may be Ndccf_DataManagement_Subscribe; or if the first request is transmitted to the H-ADRF, the first request may be Nadrf_DataManagement_RetrievalRequest or Nadrf_DataManagement_RetrievalSubscribe.

In this embodiment of this application, optionally, the first request message may further include other information, for example:
information about a target data type (event ID or data type), used to indicate a type of data that needs to be acquired;
user list information (UE list), used to indicate the roaming user terminal; and
information about a target time period (Target Time Period), used to indicate that data that needs to be acquired is data within the target time period.

The first interface network element is an interface network element for transmitting data between roaming networks, for example, the H-DCCF deployed in the H-PLMN. In addition, different visited networks V-PLMNs may alternatively correspond to different H-DCCFs. In other words, different H-DCCFs are used for different V-PLMNs.

When different H-DCCFs are deployed for different V-PLMNs, the H-NWDAF queries a unified data management (Unified Data Management, UDM) network element or an NF repository function (NF Repository Function, NRF) network element for an H-DCCF corresponding to a specific V-PLMN ID, for example, queries the NRF for an H-DCCF by using Nnrf_NFDiscovery_, where the Nnrf_NFDiscovery_ carries an H-PLMN ID and/or a V-PLMN ID.

It should be noted that, in this embodiment, the H-DCCF needs to pre-register, with the UDM network element or the NRF network element, a V-PLMN ID corresponding to the H-DCCF, for example, use Nnrf_NFManagement_NFRegister for registration.

Step 62: The H-DCCF/H-ADRF processes the first request, and transmits a processed first request to a V-DCCF/V-ADRF.

Optionally, before this, the H-DCCF/H-ADRF may query the UDM network element or the NRF network element for the V-DCCF/V-ADRF based on a target V-PLMN ID. Optionally, the H-DCCF/H-ADRF may query the UDM network element or the NRF network element by using an Nnrf_NFDiscovery_request message to learn of the V-DCCF/V-ADRF.

In this embodiment of this application, if the H-DCCF/H-ADRF only forwards the first request, for content included in the first request, refer to step 61.

In this embodiment of this application, optionally, if the first request includes the source area in the H-PLMN (HAOI), the H-DCCF/H-ADRF may further determine a UE list based on the source area in the H-PLMN, and add the UE list to the first request to obtain the processed first request. Specifically, the H-DCCF/H-ADRF may query the UDM in the H-PLMN for a list of UEs that roam from the HAOI to the V-PLMN.

Step 63: The V-DCCF/V-ADRF determines a data provider (data provider, namely, the foregoing second network element) in the V-PLMN based on the first request.

The data provider in the V-PLMN may include one or more of an NF, an AF, an OAM, a RAN, UE, and an NWDAF in the V-PLMN.

Optionally, the V-DCCF/V-ADRF may further determine, based on the target data type (data type/event ID) in the first request, a type of an NF that can provide the type. For example, if a to-be-acquired event ID is a UE location, it can be determined that a type of the NF is an AMF type. For another example, based on an analytics ID in the first request = UE mobility (mobility), a VNWDAF for generating the UE mobility analytics in the V-PLMN is determined.

Optionally, the V-DCCF/V-ADRF determines, based on the target area included in the first request, an NF instance (instance(s)) corresponding to a type (type) of an NF serving the area. For example, based on a target area = an AOI in the V-PLMN (for example, a TA 1 in the V-PLMN), the V-DCCF/V-ADRF determines that an AMF instance serving the AOI in the V-PLMN is an AMF instance 1.

Optionally, before determining the data provider or acquiring data from the data provider, the V-DCCF/V-ADRF further needs to determine whether the H-PLMN is authorized to acquire data.

Optionally, the V-DCCF/V-ADRF determines one or more of the following information:
whether the H-PLMN is authorized to acquire data in the V-PLMN;
whether a specific H-DCCF/H-ADRF and/or H-NWDAF in the H-PLMN are authorized to acquire data in the V-PLMN;
whether a specific H-DCCF/H-ADRF and/or H-NWDAF in the H-PLMN are authorized to acquire data of a specific V-DCCF in the V-PLMN or a specific target area in the V-PLMN; and
whether the H-PLMN is authorized to acquire data corresponding to a specific data type (identified by an event ID) in the V-PLMN.

This may be specifically determined based on a roaming agreement signed between the two PLMNs. Information, such as a scope and/or a type of data allowed to be acquired between the two PLMNs, is signed in the roaming agreement.

Step 64: The V-DCCF/V-ADRF transmits a first request to the data provider in the V-PLMN.

For content included in the first request, refer to the first request in step 62.

Step 65: The data provider in the V-PLMN acquires corresponding data based on the first request.

Optionally, the data provider determines, based on the roaming indication in the first request, that a data collection object is UE that roams to the V-PLMN.

Optionally, the data provider determines, based on PLMN ID information included in a UE ID (for example, an IMSI or an SUPI), whether the UE comes from the H-PLMN, and acquires related data for roaming UE that comes from the H-PLMN.

Further, optionally, the data provider may query the UDM in the H-PLMN for home area information of UE, determine, based on the home area information, whether the UE comes from the source area in the PLMN, and acquire related data for roaming UE that comes from the source area in the PLMN.

Optionally, the data provider acquires, based on the target data type (data type/event ID), data of the UE that belongs to the data type.

Optionally, the data provider acquires, based on the information about the target time period, data generated by the object UE within the target time period.

Optionally, the data provider determines a data collection object (namely, the object UE) based on the UE list.

Step 66: The data provider transmits a first response for the first request to the V-DCCF/V-ADRF, where the first response includes the acquired data.

Step 67: The V-DCCF/V-ADRF transmits a first response to the H-DCCF/H-ADRF.

The first response includes at least one of the following information:
a roaming indication (namely, the foregoing second roaming indication), used to indicate that the first response is specific to the roaming terminal, or indicate that the first response is specific to a user terminal that roams from the H-PLMN to the V-PLMN;
a target PLMN (namely, the foregoing identifier of the second PLMN), used to indicate a data provider network;
a target area in the V-PLMN (namely, the foregoing identifier of the second area in the second PLMN), used to indicate that the acquired data is data corresponding to the target area;
a source PLMN (namely, the foregoing identifier of the first PLMN), used to indicate a data requester network; and
a source area in the H-PLMN (namely, the foregoing identifier of the first area in the first PLMN, corresponding to an HAOI (area of interest in H-PLMN) in the figure), used to indicate that the roaming user terminal comes from the source area through roaming.

Step 68: The H-DCCF/H-ADRF transmits a first response to the H-NWDAF.

Optionally, before the H-DCCF/H-ADRF transmits the first response to the H-NWDAF, the H-DCCF/H-ADRF may further filter data in the first response based on the UE list.

Step 69: The H-NWDAF performs data analytics based on data of the roaming user terminal that is acquired from the V-PLMN, to obtain a data analytics result for the roaming user terminal.

Optionally, data analytics may be performed for each roaming user terminal, or analytics may be performed for a roaming user terminal in each source area in the H-PLMN.

### Embodiment 2 of this application:

Application scenario: A data analytics result consumer (consumer, namely, the foregoing first network element) in an H-PLMN (home PLMN, namely, the foregoing first PLMN) acquires a data analytics result for one or more roaming user terminals from an NWDAF (namely, the foregoing second network element) in a V-PLMN (visited PLMN, namely, the foregoing second PLMN), so that the H-consumer executes a corresponding policy. For example, the NWDAF in the V-PLMN generates DN performance analytics (a data network performance analytics result) for the roaming user terminal to describe service experience analytics results obtained after services are distributed to different DNs. After the results are obtained by the H-consumer, for example, an H-SMF, the H-SMF may select a session UPF and a DN for the roaming user terminal, to select an appropriate data path.

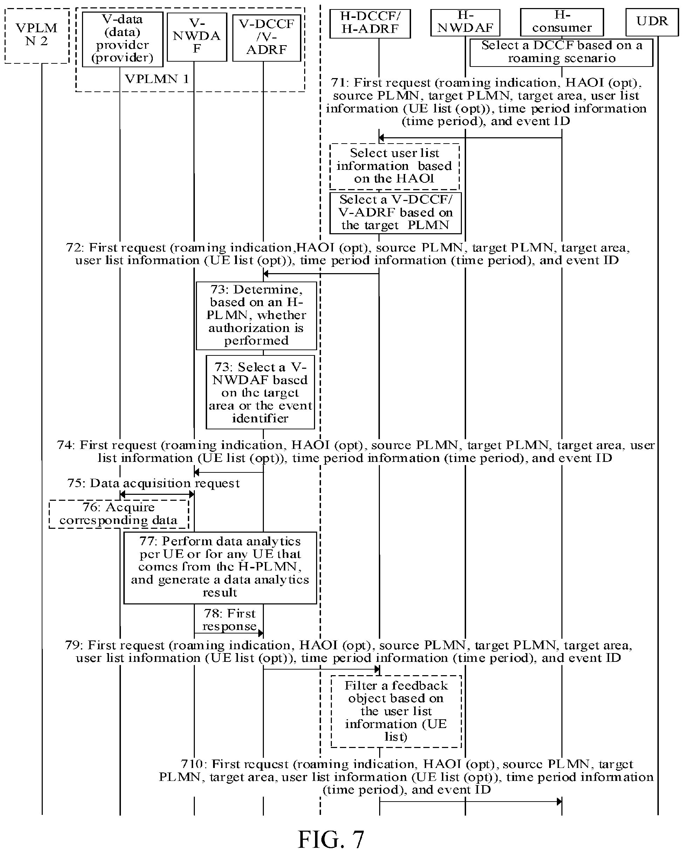

As shown in FIG. 7, for steps of Embodiment 2 of this application, refer to Embodiment 1 of this application. A difference lies in that a data analytics result is acquired. Specifically, the following steps are included:

Step 71: The H-consumer determines that a data analytics result for a roaming user terminal that roams to the V-PLMN needs to be acquired. In this case, the H-consumer transmits a first request to a first interface network element (for example, an H-DCCF or an H-ADRF), where the first request includes at least one of the following information:
a roaming indication (namely, the foregoing first roaming indication), used to indicate that the first request is specific to the roaming user terminal, or indicate that the first request is specific to a user terminal that roams from the H-PLMN to the V-PLMN;
a visited/target PLMN (namely, the foregoing identifier of the second PLMN), used to indicate a data provider network;
a target area in the V-PLMN (namely, the foregoing identifier of the second area in the second PLMN), used to indicate that a data analytics result corresponding to the target area (namely, the foregoing second area) needs to be acquired;
a home/source PLMN (namely, the foregoing identifier of the first PLMN), used to indicate a data requester network; and
a source area in the H-PLMN (namely, the foregoing identifier of the first area in the first PLMN, corresponding to an HAOI (area of interest in H-PLMN) in the figure), used to indicate that the roaming user terminal comes from the source area (namely, the foregoing first area) through roaming.

In this embodiment of this application, optionally, the first request message may further include other information, for example:
target data analytics result type information (analytics ID), used to indicate a type of a data analytics result that needs to be acquired;
user list information (UE list), used to indicate the roaming user terminal; and
information about a target time period (Time period), used to indicate that data that needs to be acquired is a data analytics result within the target time period.

The first interface network element is an interface network element for transmitting data between roaming networks, for example, the H-DCCF deployed in the H-PLMN. In addition, different visited networks V-PLMNs may alternatively correspond to different H-DCCFs. In other words, different H-DCCFs are used for different V-PLMNs.

When different H-DCCFs are deployed for different V-PLMNs, the H-NWDAF queries a UDM network element or an NRF network element for an H-DCCF corresponding to a specific V-PLMN ID, for example, queries the NRF for an H-DCCF by using Nnrf_NFDiscovery_, where the Nnrf_NFDiscovery_ carries an H-PLMN ID and/or a V-PLMN ID.

It should be noted that, in this embodiment, the H-DCCF needs to pre-register, with the UDM network element or the NRF network element, a V-PLMN corresponding to the H-DCCF, for example, use Nnrf_NFManagement_NFRegister for registration.

Step 72: The H-DCCF/H-ADRF processes the first request, and transmits a processed first request to a V-DCCF/V-ADRF.

Optionally, before this, the H-DCCF/H-ADRF may query the UDM network element or the NRF network element for the V-DCCF/V-ADRF based on a target V-PLMN ID. Optionally, the H-DCCF/H-ADRF may query the UDM network element or the NRF network element by using an Nnrf_NFDiscovery_request message to learn of the V-DCCF/V-ADRF.

In this embodiment of this application, if the H-DCCF/H-ADRF only forwards the first request, for content included in the first request, refer to step 71.

In this embodiment of this application, optionally, if the first request includes the source area in the H-PLMN (HAOI), the H-DCCF/H-ADRF may further determine a UE list based on the source area in the H-PLMN, and add the UE list to the first request to obtain the processed first request. Specifically, the H-DCCF/H-ADRF may query the UDM in the H-PLMN for a list of UEs that roam from the HAOI to the V-PLMN.

Step 73: The V-DCCF/V-ADRF determines, based on the first request, an NWDAF (namely, the foregoing second network element) for providing a data analytics result in the V-PLMN.

Optionally, the V-DCCF/V-ADRF may further determine, based on the target data type (analytics ID) in the first request, an NWDAF that can provide the type.

Optionally, the V-DCCF/V-ADRF determines, based on the target area in the V-PLMN that is included in the first request, an NWDAF serving the area.

Optionally, the V-DCCF/V-ADRF may further determine whether the H-PLMN is authorized to acquire a data analytics result.

Optionally, the V-DCCF/V-ADRF determines one or more of the following information:
whether the H-PLMN is authorized to acquire a data analytics result in the V-PLMN;
whether a specific H-DCCF/H-ADRF and/or H-consumer in the H-PLMN are authorized to acquire a data analytics result in the V-PLMN;
whether a specific H-DCCF/H-ADRF and/or H-consumer in the H-PLMN are authorized to acquire a data analytics result for a specific V-DCCF in the V-PLMN or a specific target area in the V-PLMN; and
whether the H-PLMN is authorized to acquire a specific data analytics result (identified by an analytics ID) in the V-PLMN.

This may be specifically determined based on a roaming agreement signed between the two PLMNs. Information, such as a scope and/or a type of a data analytics result allowed to be acquired between the two PLMNs, is signed in the roaming agreement.

Step 74: The V-DCCF/V-ADRF transmits a first request to a V-NWDAF.

For content included in the first request, refer to the first request in step 72.

Step 75: The V-NWDAF transmits a data acquisition request to a V-data provider to acquire corresponding data for generating a data analytics result.

Before the transmitting a data acquisition request to a V-data provider, the method further includes:
Optionally, the V-NWDAF determines, based on the roaming indication in the first request, that a data collection object is UE that roams to the V-PLMN.

Optionally, the data provider determines a data collection object (namely, the object UE) based on the UE list.

Alternatively, optionally, the V-NWDAF determines, based on PLMN ID information included in a UE ID (for example, an IMSI or an SUPI), whether the UE comes from the H-PLMN, and acquires related data for roaming UE that comes from the H-PLMN.

Further, optionally, the V-NWDAF may query the UDM in the H-PLMN for home area information of UE, determine, based on the home area information, whether the UE comes from the source area in the PLMN, and acquire related data for roaming UE that comes from the source area in the PLMN.

Before the transmitting a data acquisition request to a V-data provider, the method further includes:

Optionally, the V-NWDAF determines, based on the target data analytics result type (analytics ID), a type of data (event ID/data type) to be acquired from the V-data provider, to generate a target data analytics result.

Optionally, the V-NWDAF acquires, based on the information about the target time period, data generated by the object UE within the target time period, to generate the target data analytics result.

Step 76: The V-data provider acquires corresponding data based on the data acquisition request.

Step 77: The V-NWDAF generates a data analytics result based on the data acquired from the V-data provider.

In this embodiment of this application, data analytics may be performed for each roaming user terminal or all roaming user terminals.

Step 78: The V-NWDAF transmits a first response for the first request to the V-DCCF/V-ADRF, where the first response includes the acquired data analytics result.

Step 79: The V-DCCF/V-ADRF transmits a first response to the H-DCCF/H-ADRF.

The first response includes at least one of the following information:
a roaming indication (namely, the foregoing second roaming indication), used to indicate that the first response is specific to the roaming user terminal, or indicate that the first response is specific to a user terminal that roams from the H-PLMN to the V-PLMN;
a target PLMN (namely, the foregoing identifier of the second PLMN), used to indicate a data provider network;
a target area in the V-PLMN (namely, the foregoing identifier of the second area in the second PLMN), used to indicate that a data analytics result corresponding to the roaming user terminal in the target area is acquired;
a source PLMN (namely, the foregoing identifier of the first PLMN), used to indicate a data requester network; and
a source area in the H-PLMN (namely, the foregoing identifier of the first area in the first PLMN, corresponding to an HAOI (area of interest in H-PLMN) in the figure), used to indicate that the roaming user terminal comes from the source area through roaming.

Step 710: The H-DCCF/H-ADRF transmits a first response to the H-consumer.

Optionally, before the H-DCCF/H-ADRF transmits the first response to the H-consumer, the H-DCCF/H-ADRF may further filter data in the first response based on the UE list.

The first request transmitted by the V-DCCF to the V-NWDAF in step 74 may be Nnwdaf_AnalyticsSubscription_Subscribe or Nnwdaf_AnalyticsInfo_Request.

### Embodiment 3 of this application:

In this embodiment, an NWDAF (namely, the foregoing first network element, also referred to as a V-NWDAF) in a V-PLMN (visited PLMN, namely, the foregoing first PLMN) is to generate a data analytics result for one or more roaming user terminals, and needs to acquire, from a data provider in an H-PLMN (home PLMN, namely, the foregoing second PLMN), data generated by the roaming user terminal in the H-PLMN.

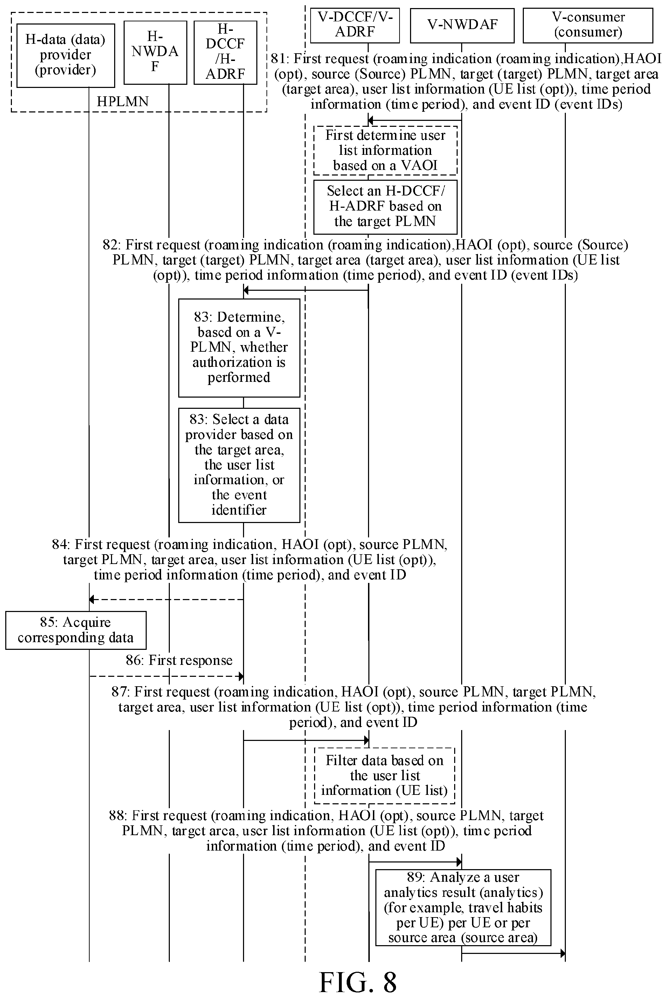

As shown in FIG. 8, a data acquisition method in this embodiment of this application includes the following steps:

Step 81: The V-NWDAF determines that data generated in the H-PLMN by a roaming user terminal that roams from the H-PLMN to the V-PLMN needs to be acquired. In this case, the V-NWDAF transmits a first request to a first interface network element (for example, a V-DCCF or a V-ADRF), where the first request includes at least one of the following information:
a roaming indication (namely, the foregoing first roaming indication), used to indicate that the first request is specific to the roaming user terminal, or indicate that the first request is specific to a user terminal that roams from the H-PLMN to the V-PLMN;
a home/target PLMN (namely, the foregoing identifier of the second PLMN), used to indicate a data provider network;
a target area in the H-PLMN (namely, the foregoing identifier of the second area in the second PLMN), used to indicate that data corresponding to the target area (namely, the foregoing second area) needs to be acquired;
a visited/source PLMN (namely, the foregoing identifier of the first PLMN), used to indicate a data requester network; and
a source area in the V-PLMN (namely, the foregoing identifier of the first area in the first PLMN, corresponding to a VAOI (area of interest in V-PLMN) in the figure), used to indicate that the roaming user terminal is located in the source area (namely, the foregoing first area).

In this embodiment of this application, optionally, the first request message may further include other information, for example:
information about a target data type (event ID or data type), used to indicate a type of data that needs to be acquired;
user list information (UE list), used to indicate the roaming user terminal; and
information about a target time period (Time period), used to indicate that data that needs to be acquired is data within the target time period.

The first interface network element is an interface network element for transmitting data between roaming networks, for example, the V-DCCF deployed in the V-PLMN. In addition, different H-PLMNs may alternatively correspond to different V-DCCFs. In other words, different V-DCCFs are used for different H-PLMNs.

When different V-DCCFs are deployed for different H-PLMNs, the V-NWDAF queries a UDM network element or an NRF network element for a V-DCCF corresponding to a specific H-PLMN ID.

It should be noted that, in this embodiment, the V-DCCF needs to pre-register, with the UDM network element or the NRF network element, an H-PLMN corresponding to the V-DCCF, for example, use Nnrf_NFManagement_NFRegister for registration.

Step 82: The V-DCCF/V-ADRF processes the first request, and transmits a processed first request to an H-DCCF/H-ADRF.

Optionally, before this, the V-DCCF/V-ADRF may query the UDM network element or the NRF network element for the H-DCCF/H-ADRF based on an H-PLMN ID.

In this embodiment of this application, if the V-DCCF/V-ADRF only forwards the first request, for content included in the first request, refer to step 81.

In this embodiment of this application, optionally, if the first request includes the source area in the V-PLMN (V-AOI), the V-DCCF/V-ADRF may further determine a UE list based on the source area in the V-PLMN, and add the UE list to the first request to obtain the processed first request. Specifically, the V-DCCF/V-ADRF may query an AMF corresponding to the VAOI for a list of UEs in the VAOI that come from the HPLMN.

Step 83: The H-DCCF/H-ADRF determines a data provider (data provider, namely, the foregoing second network element) in the H-PLMN based on the first request.

The data provider in the H-PLMN may include one or more of an NF, an AF, an OAM, a RAN, UE, and an NWDAF in the H-PLMN.

Optionally, the H-DCCF/H-ADRF may further determine, based on the target data type (data type/event ID) in the first request, a type of an NF that can provide the type.

Optionally, the H-DCCF/H-ADRF determines, based on the target area included in the first request, an NF instance (instance(s)) corresponding to a type (type) of an NF serving the area.

Optionally, before determining the data provider or acquiring data from the data provider, the H-DCCF/H-ADRF further needs to determine whether the V-PLMN is authorized to acquire data.

Optionally, the H-DCCF/H-ADRF determines one or more of the following information:
whether the V-PLMN is authorized to acquire data in the H-PLMN;
whether a specific V-DCCF/V-ADRF and/or V-NWDAF in the V-PLMN are authorized to acquire data in the H-PLMN;
whether a specific V-DCCF/V-ADRF and/or V-NWDAF in the V-PLMN are authorized to acquire data of a specific H-DCCF in the H-PLMN or a specific target area in the H-PLMN; and
whether the V-PLMN is authorized to acquire specific data (identified by an event ID) in the H-PLMN.

This may be specifically determined based on a roaming agreement signed between the two PLMNs. Information, such as a scope and/or a type of data allowed to be acquired between the two PLMNs, is signed in the roaming agreement.

Step 84: The H-DCCF/H-ADRF transmits a first request to the data provider in the H-PLMN.

For content included in the first request, refer to the first request in step 82.

Step 85: The data provider in the H-PLMN acquires corresponding data based on the first request.

Optionally, the data provider in the H-PLMN determines a UE list based on the roaming indication and the V-PLMN in the first request, where a roaming user terminal in the UE list is a user terminal that roams to the V-PLMN.

Optionally, the data provider in the H-PLMN determines a UE list based on the source AOI (the AOI in the V-PLMN in this embodiment) in the first request, where a roaming user terminal in the UE list is a user terminal that roams to the source AOI.

Optionally, the data provider acquires, based on the target data type (data type/event ID), data of the UE that belongs to the data type.

Optionally, the data provider acquires, based on the information about the target time period, data generated by object UE within the target time period.

Optionally, the data provider determines a data collection object (namely, the object UE) based on the UE list.

Step 86: The data provider transmits a first response for the first request to the H-DCCF/H-ADRF, where the first response includes the acquired data.

Step 87: The H-DCCF/H-ADRF transmits a first response to the V-DCCF/V-ADRF.

The first response includes at least one of the following information:
a roaming indication (namely, the foregoing second roaming indication), used to indicate that the first response is specific to the roaming terminal, or indicate that the first response is specific to a user terminal that roams from the H-PLMN to the V-PLMN;
a home/target PLMN (namely, the foregoing identifier of the second PLMN), used to indicate a data provider network;
a target area in the H-PLMN (namely, the foregoing identifier of the second area in the second PLMN), used to indicate that data corresponding to the roaming user terminal in the target area is acquired;
a visited/source PLMN (namely, the foregoing identifier of the first PLMN), used to indicate a data requester network; and
a source area in the V-PLMN (namely, the foregoing identifier of the first area in the first PLMN, corresponding to a VAOI (area of interest in V-PLMN) in the figure), used to indicate that the roaming user terminal is a user terminal that roams to the source area.

Step 88: The V-DCCF/V-ADRF transmits a first response to the V-NWDAF.

Optionally, before the V-DCCF/V-ADRF transmits the first response to the V-NWDAF, the V-DCCF/V-ADRF may further filter data in the first response based on the UE list.

Step 89: The V-NWDAF performs data analytics based on data of the roaming user terminal that is acquired from the H-PLMN, to obtain a data analytics result for the roaming user terminal.

A data acquisition direction in this embodiment is opposite to that in Embodiment 1, but a principle is similar. Differences are as follows:

The data provider in the H-PLMN may determine a UE list based on the roaming indication and the V-PLMN ID in the first request, where a roaming user terminal in the UE list is a user terminal that roams to the V-PLMN.

The data provider in the H-PLMN may alternatively determine a UE list based on the source AOI in the in VPLMN (the AOI in the V-PLMN in this embodiment) in the first request, where a roaming user terminal in the UE list is a user terminal that roams to the source AOI in the VPLMN.

### Embodiment 4 of this application:

Application scenario: A data analytics result consumer (consumer, namely, the foregoing first network element) in a V-PLMN (namely, the foregoing first PLMN) acquires a data analytics result for one or more roaming user terminals from an NWDAF (namely, the foregoing second network element) in an H-PLMN (namely, the foregoing second PLMN), so that the V-consumer executes a corresponding policy.

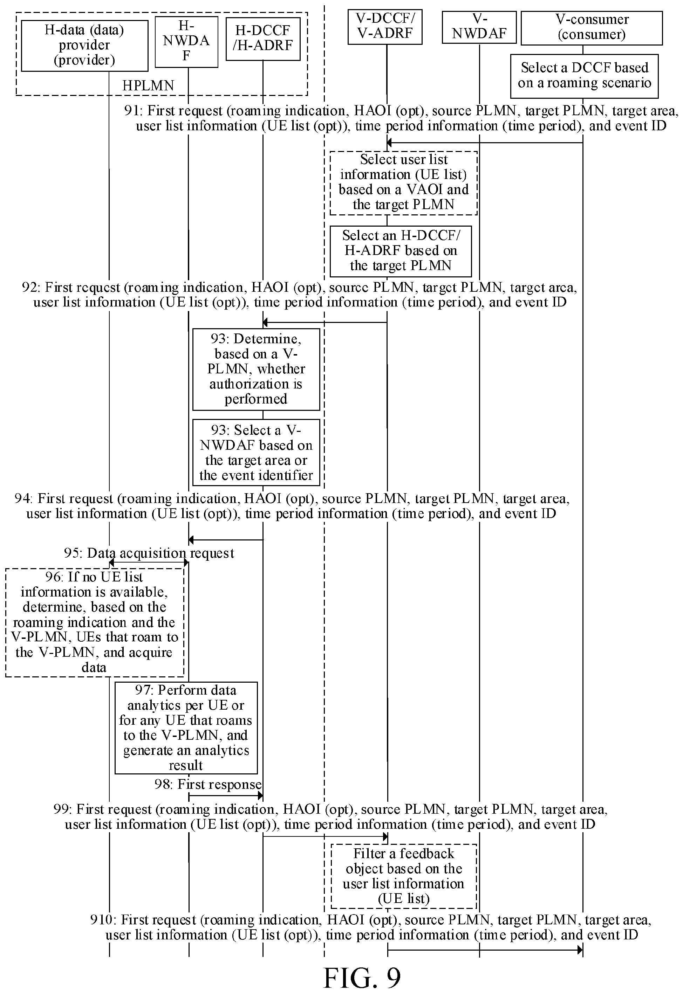

As shown in FIG. 9, the following steps are specifically included:
Step 91: The V-consumer determines that a data analytics result, in the H-PLMN, for a roaming user terminal that roams to the V-PLMN needs to be acquired. In this case, the V-consumer transmits a first request to a first interface network element (for example, a V-DCCF or a V-ADRF), where the first request includes at least one of the following information:
a roaming indication (namely, the foregoing first roaming indication), used to indicate that the first request is specific to the roaming user terminal, or indicate that the first request is specific to a user terminal that roams from the H-PLMN to the V-PLMN;
a home/target PLMN (namely, the foregoing identifier of the second PLMN), used to indicate a data provider network;
a target area in the H-PLMN (namely, the foregoing identifier of the second area in the second PLMN), used to indicate that data corresponding to the target area (namely, the foregoing second area) needs to be acquired;
a visited/source PLMN (namely, the foregoing identifier of the first PLMN), used to indicate a data requester network; and
a source area in the V-PLMN (namely, the foregoing identifier of the first area in the first PLMN, corresponding to a VAOI (area of interest in V-PLMN) in the figure), used to indicate that the roaming user terminal is located in the source area (namely, the foregoing first area).

In this embodiment of this application, optionally, the first request message may further include other information, for example:
information about a target data type (Analytics ID), used to indicate a type of a data analytics result that needs to be acquired;
user list information (UE list), used to indicate the roaming user terminal; and
information about a target time period (Time period), used to indicate that data that needs to be acquired is a data analytics result within the target time period.

The first interface network element is an interface network element for transmitting data between roaming networks, for example, the V-DCCF deployed in the V-PLMN. In addition, different H-PLMNs may alternatively correspond to different V-DCCFs. In other words, different V-DCCFs are used for different H-PLMNs.

When different V-DCCFs are deployed for different H-PLMNs, the V-consumer queries a UDM network element or an NRF network element for a V-DCCF corresponding to a specific H-PLMN ID.

It should be noted that, in this embodiment, the V-DCCF needs to pre-register, with the UDM network element or the NRF network element, an H-PLMN corresponding to the V-DCCF.

Step 92: The V-DCCF/V-ADRF processes the first request, and transmits a processed first request to an H-DCCF/H-ADRF.

Optionally, before this, the V-DCCF/V-ADRF may query the UDM network element or the NRF network element for the H-DCCF/H-ADRF based on an H-PLMN ID.

In this embodiment of this application, if the V-DCCF/V-ADRF only forwards the first request, for content included in the first request, refer to step 91.

In this embodiment of this application, optionally, if the first request includes the source area in the V-PLMN (VAOI), the V-DCCF/V-ADRF may further determine a UE list based on the source area in the V-PLMN, and add the UE list to the first request to obtain the processed first request. Specifically, the V-DCCF/V-ADRF may query an AMF corresponding to the VAOI for a list of UEs in the VAOI that come from the HPLMN.

Step 93: The H-DCCF/H-ADRF determines, based on the first request, an NWDAF (namely, the foregoing second network element) for providing a data analytics result in the H-PLMN.

Optionally, the H-DCCF/H-ADRF may further determine, based on the target data type (Analytics ID) in the first request, an NWDAF that can provide the type.

Optionally, the H-DCCF/H-ADRF determines, based on the target area in the HPLMN that is included in the first request, an NWDAF serving the area.

Optionally, the H-DCCF/H-ADRF may further determine whether the V-PLMN is authorized to acquire a data analytics result.

Optionally, the H-DCCF/H-ADRF determines one or more of the following information:
whether the V-PLMN is authorized to acquire a data analytics result in the H-PLMN;
whether a specific V-DCCF/V-ADRF and/or V-consumer in the V-PLMN are authorized to acquire a data analytics result in the H-PLMN;
whether a specific V-DCCF/V-ADRF and/or V-consumer in the V-PLMN are authorized to acquire a data analytics result of a specific H-DCCF in the H-PLMN or a specific target area in the HPLMN; and
whether the V-PLMN is authorized to acquire a specific data analytics result (identified by an analytics ID) in the H-PLMN.

This may be specifically determined based on a roaming agreement signed between the two PLMNs. Information, such as a scope and/or a type of a data analytics result allowed to be acquired between the two PLMNs, is signed in the roaming agreement.

Step 94: The H-DCCF/H-ADRF transmits a first request to an H-NWDAF.

For content included in the first request, refer to the first request in step 92.

Step 95: The H-NWDAF transmits a data acquisition request to an H-data provider to acquire corresponding data for generating a data analytics result.

Before the transmitting a data acquisition request to an H-data provider, the method further includes:
Optionally, the H-NWDAF determines, based on the roaming indication in the first request, that a data collection object is UE that roams to the V-PLMN.

Optionally, the data provider determines a data collection object (namely, the object UE) based on the UE list.

Alternatively, further, optionally, the H-NWDAF may query the UDM in the H-PLMN for whether UE is located in the source area in the V-PLMN, and acquire related data for roaming UE that is located in the source area in the V-PLMN.

Before the transmitting a data acquisition request to an H-data provider, the method further includes:
Optionally, the H-NWDAF determines, based on the target data analytics result type (analytics ID), a type of data (event ID/data type) to be acquired from the H-data provider, to generate a target data analytics result.

Optionally, the H-NWDAF acquires, based on the information about the target time period, data generated by the object UE within the target time period, to generate the target data analytics result.

Step 96: The H-data provider acquires corresponding data based on the data acquisition request.

If the H-NWDAF does not determine a UE list, the H-data provider may alternatively determine, based on the roaming indication in the first request, that a data collection object is UE that roams to the V-PLMN.

Step 97: The H-NWDAF generates a data analytics result based on the data acquired from the H-data provider.

In this embodiment of this application, data analytics may be performed for each roaming user terminal or all roaming user terminals.

Step 78: The H-NWDAF transmits a first response for the first request to the H-DCCF/H-ADRF, where the first response includes the acquired data analytics result.

Step 79: The H-DCCF/H-ADRF transmits a first response to the V-DCCF/V-ADRF.

The first response includes at least one of the following information:
a roaming indication (namely, the foregoing second roaming indication), used to indicate that the first response is specific to the roaming terminal, or indicate that the first response is specific to a user terminal that roams from the H-PLMN to the V-PLMN;
a home/target PLMN (namely, the foregoing identifier of the second PLMN), used to indicate a data provider network;
a target area in the H-PLMN (namely, the foregoing identifier of the second area in the second PLMN), used to indicate that a data analytics result corresponding to the roaming user terminal in the target area needs to be acquired;
a visited/source PLMN (namely, the foregoing identifier of the first PLMN), used to indicate a data requester network; and
a source area in the V-PLMN (namely, the foregoing identifier of the first area in the first PLMN, corresponding to a VAOI (area of interest in V-PLMN) in the figure), used to indicate that the roaming user terminal is a user terminal that roams to the source area in the V-PLMN.

Step 910: The V-DCCF/V-ADRF transmits a first response to the V-consumer.

Optionally, before the V-DCCF/V-ADRF transmits the first response to the V-consumer, the V-DCCF/V-ADRF may further filter data in the first response based on the UE list.

A data analytics result acquisition direction in this embodiment is opposite to that in Embodiment 2, but a principle is similar. Differences are as follows:
Optionally, in a manner, the data provider in the H-PLMN determines a UE list based on two pieces of information: the roaming indication and a source PLMN (the V-PLMN in this embodiment), where the UE list includes UE that roams to the V-PLMN.

Optionally, the data provider in the H-PLMN may alternatively determine a UE list based on a source AOI (the AOI in the V-PLMN in this embodiment), where the UE list includes UE that roams to the V-AOI.

The data acquisition method provided in embodiments of this application may be performed by a data acquisition apparatus. In embodiments of this application, a data acquisition apparatus provided in embodiments of this application is described by using an example in which a data acquisition apparatus performs the data acquisition method.

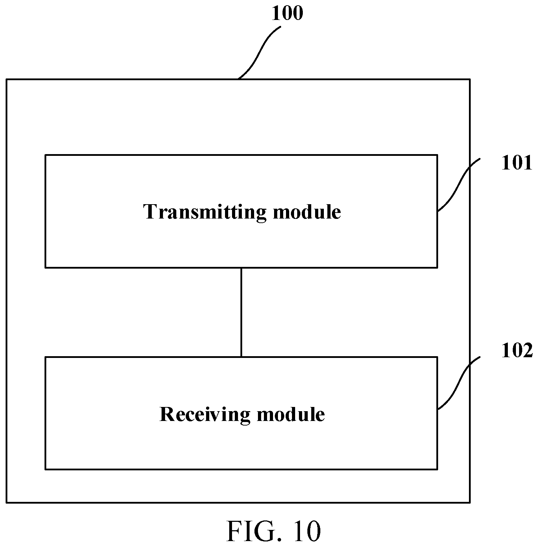

As shown in FIG. 10, an embodiment of this application further provides a data acquisition apparatus 100, including:
a transmitting module 101, configured to transmit a first request to a second network element in a second PLMN, where the first request is used to acquire data generated by a roaming user terminal in the second PLMN and/or a data analytics result generated by the second PLMN for the roaming user terminal, and the roaming user terminal is a user terminal that roams from a first PLMN to the second PLMN or a user terminal that roams from the second PLMN to the first PLMN; and
a receiving module 102, configured to receive a first response transmitted by the second network element for the first request.

In this embodiment of this application, the data or the data analytics result of the roaming user terminal can be acquired across PLMNs, to perform policy optimization on mobility management and/or session management for the roaming user terminal.

In this embodiment of this application, data is transmitted between roaming networks through a data proxy network element, so that different networks can smoothly communicate with each other.

Optionally, the first request includes at least one of the following information:
a first roaming indication, used to indicate that the first request is specific to the roaming user terminal, or indicate that the first request is specific to the user terminal that roams from the first PLMN to the second PLMN or the user terminal that roams from the second PLMN to the first PLMN;
an identifier of the second PLMN, used to indicate a data provider network;
an identifier of a second area in the second PLMN, used to indicate that data and/or a data analytics result corresponding to the roaming user terminal in the second area need to be acquired;
an identifier of the first PLMN, used to indicate a data requester network; and
an identifier of a first area in the first PLMN, used to indicate that the roaming user terminal is located in the first area or comes from the first area through roaming.

Optionally, the first request further includes at least one of the following information:
information about a target data type, used to indicate a type of data that needs to be acquired and/or a type of a data analytics result that needs to be acquired;
information about a target time period, used to indicate that data that needs to be acquired is data and/or a data analytics result within the target time period; and
user list information, used to indicate the roaming user terminal.

Optionally, the transmitting module 101 is configured to transmit the first request to the second network element through a first interface network element.

Optionally, the data acquisition apparatus 100 further includes:
a determining module, configured to determine, based on the identifier of the first PLMN and/or the identifier of the second PLMN, the first interface network element that is in the first PLMN and that corresponds to the second PLMN.

Optionally, each second PLMN corresponds to one first interface network element.

Optionally, the determining module is configured to query, based on the identifier of the first PLMN and/or the identifier of the second PLMN, a UDM network element or an NRF network element for the first interface network element that is in the first PLMN and that corresponds to the second PLMN.

Optionally, the first response includes at least one of the following information:
a second roaming indication, used to indicate that the first response is specific to the roaming terminal, or indicate that the first response is specific to the user terminal that roams from the first PLMN to the second PLMN or the user terminal that roams from the second PLMN to the first PLMN;
an identifier of the second PLMN, used to indicate a data provider network;
an identifier of a second area in the second PLMN, used to indicate that data and/or a data analytics result corresponding to the roaming user terminal in the second area are to be acquired;
an identifier of the first PLMN, used to indicate a data requester network; and
an identifier of a first area in the first PLMN, used to indicate that the roaming user terminal is located in the first area or comes from the first area through roaming.

The data acquisition apparatus in this embodiment of this application may be an electronic device, for example, an electronic device with an operating system; or may be a component in an electronic device, for example, an integrated circuit or a chip.

The data acquisition apparatus provided in this embodiment of this application is capable of implementing the processes implemented in the method embodiment of FIG. 2, with the same technical effect achieved. To avoid repetition, details are not described herein again.

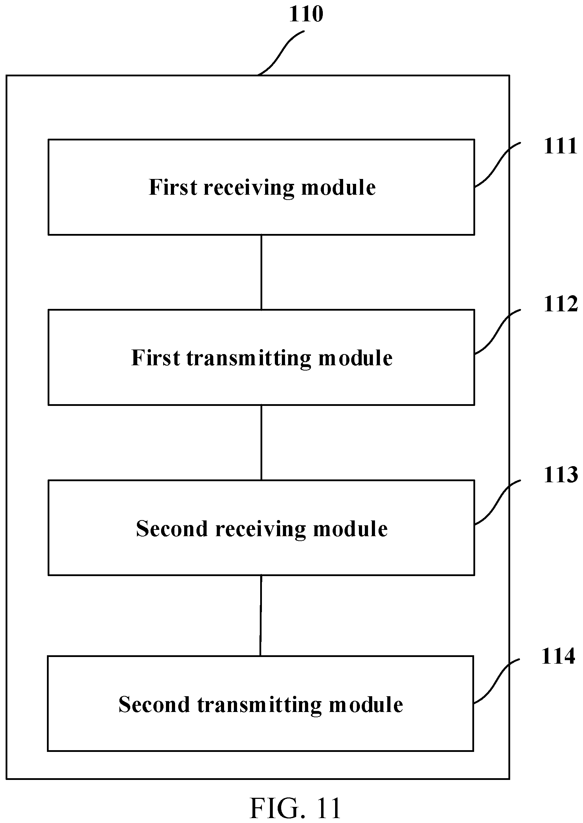

As shown in FIG. 11, an embodiment of this application further provides a data acquisition apparatus 110, including:
a first receiving module 111, configured to receive a first request transmitted by a first network element in a first PLMN, where the first request is used to acquire data generated by a roaming user terminal in a second PLMN and/or a data analytics result generated by the second PLMN for the roaming user terminal, and the roaming user terminal is a user terminal that roams from the first PLMN to the second PLMN or a user terminal that roams from the second PLMN to the first PLMN;
a first transmitting module 112, configured to process the first request, and transmit a processed first request to a second network element in the second PLMN;
a second receiving module 113, configured to receive a first response transmitted by the second network element for the first request; and
a second transmitting module 114, configured to transmit the first response to the first network element.

In this embodiment of this application, data is transmitted between roaming networks through a data proxy network element, so that different networks can smoothly communicate with each other.

Optionally, the first request includes at least one of the following information:
a first roaming indication, used to indicate that the first request is specific to the roaming user terminal, or indicate that the first request is specific to the user terminal that roams from the first PLMN to the second PLMN or the user terminal that roams from the second PLMN to the first PLMN;
an identifier of the second PLMN, used to indicate a data provider network;
an identifier of a second area in the second PLMN, used to indicate that data and/or a data analytics result corresponding to the roaming user terminal in the second area need to be acquired;
an identifier of the first PLMN, used to indicate a data requester network; and
an identifier of a first area in the first PLMN, used to indicate that the roaming user terminal is located in the first area or comes from the first area through roaming.

Optionally, the first transmitting module 112 is configured to: determine user list information based on the identifier of the first area in the first PLMN, where the user list information is used to indicate the roaming user terminal, and the roaming user terminal is located in the first area or comes from the first area through roaming; and add the user list information to the first request to obtain the processed first request.

Optionally, the data acquisition apparatus 110 further includes:
a determining module, configured to determine a second interface network element in the second PLMN, where
the first transmitting module 112 is configured to transmit the processed first request to the second network element through the second interface network element.

Optionally, the determining module is configured to determine, based on the identifier of the first PLMN and/or the identifier of the second PLMN, the second interface network element that is in the second PLMN and that corresponds to the first PLMN.

Optionally, each first PLMN corresponds to one second interface network element.

Optionally, the determining module is configured to query, based on the identifier of the first PLMN and/or the identifier of the second PLMN, a UDM network element or an NRF network element for the second interface network element that is in the second PLMN and that corresponds to the first PLMN.

The data acquisition apparatus in this embodiment of this application may be an electronic device, for example, an electronic device with an operating system; or may be a component in an electronic device, for example, an integrated circuit or a chip.

The data acquisition apparatus provided in this embodiment of this application is capable of implementing the processes implemented in the method embodiment of FIG. 3, with the same technical effect achieved. To avoid repetition, details are not described herein again.

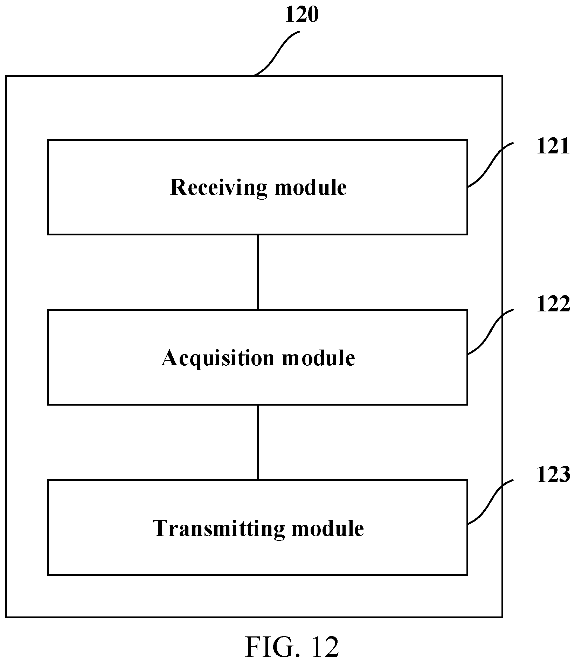

As shown in FIG. 12, an embodiment of this application further provides a data acquisition apparatus 120, including:
a receiving module 121, configured to receive a first request transmitted by a first network element in a first PLMN, where the first request is used to acquire data generated by a roaming user terminal in a second PLMN and/or a data analytics result generated by the second PLMN for the roaming user terminal, and the roaming user terminal is a user terminal that roams from the first PLMN to the second PLMN or a user terminal that roams from the second PLMN to the first PLMN;
an acquisition module 122, configured to acquire, based on the first request, the data generated by the roaming user terminal in the second PLMN, and/or acquire the data analytics result generated based on the data generated by the roaming user terminal in the second PLMN; and
a transmitting module 123, configured to transmit a first response to the first network element, where the first response includes the acquired data and/or data analytics result.

In this embodiment of this application, the data or the data analytics result of the roaming user terminal can be acquired across PLMNs, to perform policy optimization on mobility management and/or session management for the roaming user terminal.

Optionally, the first request includes at least one of the following information:
a first roaming indication, used to indicate that the first request is specific to the roaming user terminal, or indicate that the first request is specific to the user terminal that roams from the first PLMN to the second PLMN or the user terminal that roams from the second PLMN to the first PLMN;
an identifier of the second PLMN, used to indicate a data provider network;
an identifier of a second area in the second PLMN, used to indicate that data and/or a data analytics result corresponding to the roaming user terminal in the second area need to be acquired;
an identifier of the first PLMN, used to indicate a data requester network; and
an identifier of a first area in the first PLMN, used to indicate that the roaming user terminal is located in the first area or comes from the first area through roaming.

Optionally, the first request further includes at least one of the following information:
a target data type, used to indicate a type of data that needs to be acquired and/or a type of a data analytics result that needs to be acquired;
a target time period, used to indicate that data that needs to be acquired is data and/or a data analytics result within the target time period; and
a user list, used to indicate the roaming user terminal.

Optionally, the acquisition module 122 is configured to determine, based on the first roaming indication in the first request, that the roaming user terminal is a user terminal that roams from the first PLMN to the second PLMN or a user terminal that roams from the second PLMN to the first PLMN.

Optionally, the acquisition module 122 is configured to: in the case of determining that the roaming user terminal is a user terminal that roams from the first PLMN to the second PLMN, determine, based on a PLMN identifier included in an identifier of a user terminal, whether the user terminal comes from the first PLMN, and by treating a user terminal that comes from the first PLMN as the roaming user terminal, acquire the data generated by the roaming user terminal in the second PLMN, and/or acquire the data analytics result generated based on the data generated by the roaming user terminal in the second PLMN.

Optionally, the acquisition module 122 is configured to: in the case of determining that the roaming user terminal is a user terminal that roams from the first PLMN to the second PLMN, determine, based on a PLMN identifier included in an identifier of a user terminal, whether the user terminal comes from the first PLMN; if the user terminal comes from the first PLMN, query a UDM in the first PLMN for home area information of the user terminal; determine, based on the home area information, whether the user terminal comes from the first area in the first PLMN; and by treating a user terminal that comes from the first area in the first PLMN as the roaming user terminal, acquire the data generated by the roaming user terminal in the second PLMN, and/or acquire the data analytics result generated based on the data generated by the roaming user terminal in the second PLMN.

Optionally, the acquisition module 122 is configured to: in the case of determining that the roaming user terminal is a user terminal that roams from the second PLMN to the first PLMN, query a UDM of the second PLMN to learn of a user terminal that is located in the first PLMN or the first area in the first PLMN; and by treating the user terminal as the roaming user terminal, acquire the data generated by the roaming user terminal in the second PLMN, and/or acquire the data analytics result generated based on the data generated by the roaming user terminal in the second PLMN.

Optionally, the first response includes at least one of the following information:
a second roaming indication, used to indicate that the first response is specific to the roaming terminal, or indicate that the first response is specific to the user terminal that roams from the first PLMN to the second PLMN or the user terminal that roams from the second PLMN to the first PLMN;
an identifier of the second PLMN, used to indicate a data provider network;
an identifier of a second area in the second PLMN, used to indicate that data and/or a data analytics result corresponding to the roaming user terminal in the second area are to be acquired;
an identifier of the first PLMN, used to indicate a data requester network; and
an identifier of a first area in the first PLMN, used to indicate that the roaming user terminal is located in the first area or comes from the first area through roaming.

The data acquisition apparatus in this embodiment of this application may be an electronic device, for example, an electronic device with an operating system; or may be a component in an electronic device, for example, an integrated circuit or a chip.

The data acquisition apparatus provided in this embodiment of this application is capable of implementing the processes implemented in the method embodiment of FIG. 4, with the same technical effect achieved. To avoid repetition, details are not described herein again.

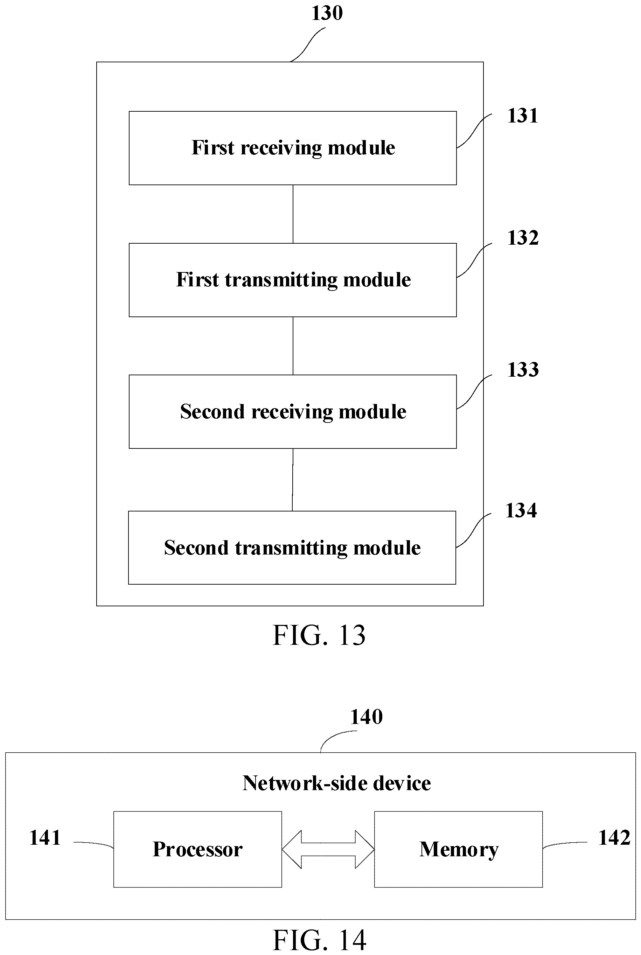

As shown in FIG. 13, an embodiment of this application further provides a data acquisition apparatus 130, including:
a first receiving module 131, configured to receive a first request transmitted by a first network element in a first PLMN, where the first request is used to acquire data generated by a roaming user terminal in a second PLMN and/or a data analytics result generated by the second PLMN for the roaming user terminal, and the roaming user terminal is a user terminal that roams from the first PLMN to the second PLMN or a user terminal that roams from the second PLMN to the first PLMN;
a first transmitting module 132, configured to transmit the first request to a second network element in the second PLMN;
a second receiving module 133, configured to receive a first response transmitted by the second network element for the first request; and
a second transmitting module 134, configured to transmit the first response to the first network element.

In this embodiment of this application, data is transmitted between roaming networks through a data proxy network element, so that different networks can smoothly communicate with each other.

Optionally, the first request includes at least one of the following information:
a first roaming indication, used to indicate that the first request is specific to the roaming user terminal, or indicate that the first request is specific to the user terminal that roams from the first PLMN to the second PLMN or the user terminal that roams from the second PLMN to the first PLMN;
an identifier of the second PLMN, used to indicate a data provider network;
an identifier of a second area in the second PLMN, used to indicate that data and/or a data analytics result corresponding to the roaming user terminal in the second area need to be acquired;
an identifier of the first PLMN, used to indicate a data requester network; and
an identifier of a first area in the first PLMN, used to indicate that the roaming user terminal is located in the first area or comes from the first area through roaming.

Optionally, the first request further includes at least one of the following information:
information about a target data type, used to indicate a type of data that needs to be acquired and/or a type of a data analytics result that needs to be acquired;
information about a target time period, used to indicate that data that needs to be acquired is data and/or a data analytics result within the target time period; and
user list information, used to indicate the roaming user terminal.

Optionally, the data acquisition apparatus 130 further includes:
a first determining module, configured to determine authorization information of the first network element based on the first request, where the authorization information is used to indicate that the first network element is authorized to acquire the data generated by the roaming user terminal in the second PLMN and/or the data analytics result generated by the second PLMN for the roaming user terminal.

Optionally, the first determining module is configured to determine the authorization information of the first network element based on the identifier of the first PLMN and/or the identifier of the first area in the first PLMN in the first request.

Optionally, the first determining module is configured to: query a UDM, a network exposure function NEF, or a security edge protection proxy SEPP of the second PLMN for data acquisition authorization information corresponding to the identifier of the first PLMN and/or the identifier of the first area in the first PLMN, where the data acquisition authorization information is used to indicate that the first PLMN and/or a network element of the first PLMN is allowed to acquire the data generated by the roaming user terminal in the second PLMN and/or the data analytics result generated by the second PLMN for the roaming user terminal; and determine the authorization information of the first network element based on the data acquisition authorization information.

Optionally, the data acquisition apparatus 130 further includes:
a second determining module, configured to determine the second network element based on the identifier of the second area in the second PLMN and/or the information about the target data type in the first request.

The data acquisition apparatus in this embodiment of this application may be an electronic device, for example, an electronic device with an operating system; or may be a component in an electronic device, for example, an integrated circuit or a chip.

The data acquisition apparatus provided in this embodiment of this application is capable of implementing the processes implemented in the method embodiment of FIG. 5, with the same technical effect achieved. To avoid repetition, details are not described herein again.

As shown in FIG. 14, an embodiment of this application further provides a network-side device 140, including a processor 141 and a memory 142. The memory 142 stores a program or instructions capable of running on the processor 141. When the program or instructions are executed by the processor 141, the steps in the embodiments of the data acquisition method are implemented, with the same technical effect achieved. To avoid repetition, details are not described herein again.

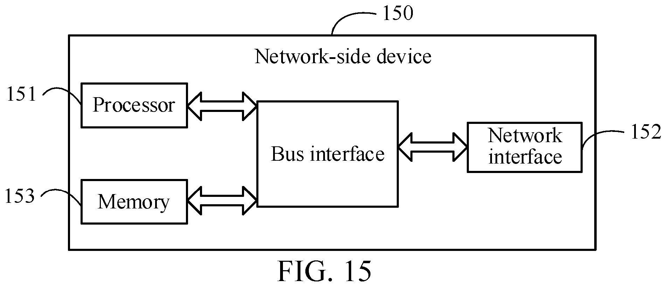

Specifically, an embodiment of this application further provides a network-side device. As shown in FIG. 15, the network-side device 150 includes a processor 151, a network interface 152, and a memory 153. The network interface 152 is, for example, a common public radio interface (common public radio interface, CPRI).

Specifically, the network-side device 150 in this embodiment of this application further includes instructions or a program stored in the memory 153 and capable of running on the processor 151, and the processor 151 invokes the instructions or program in the memory 153 to perform the method performed by the modules shown in FIG. 10, FIG. 11, FIG. 12, or FIG. 13, with the same technical effect achieved. To avoid repetition, details are not described herein again.

An embodiment of this application further provides a readable storage medium. The readable storage medium stores a program or instructions. When the program or instructions are executed by a processor, the processes in the embodiments of the data acquisition method are implemented, with the same technical effect achieved. To avoid repetition, details are not described herein again.

The processor is a processor in the terminal in the foregoing embodiments. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communications interface. The communications interface is coupled to the processor. The processor is configured to run a program or instructions, to implement the processes in the embodiments of the data acquisition method, with the same technical effect achieved. To avoid repetition, details are not described herein again.

It should be understood that the chip provided in this embodiment of this application may also be referred to as a system-level chip, a system on chip, a chip system, a system-on-a-chip, or the like.

An embodiment of this application further provides a computer program or program product. The computer program or program product is stored in a storage medium. The computer program or program product is executed by at least one processor to implement the processes in the embodiments of the data acquisition method, with the same technical effect achieved. To avoid repetition, details are not described herein again.

An embodiment of this application further provides a data acquisition system, including a first network element and a second network element, where the first network element may be configured to perform the steps of the data acquisition method performed by the foregoing first network element, and the second network element may be configured to perform the steps of the data acquisition method performed by the foregoing second network element.

An embodiment of this application further provides a data acquisition system, including a first network element, a first interface network element, and a second network element, where the first network element may be configured to perform the steps of the data acquisition method performed by the foregoing first network element, the first interface network element may be configured to perform the steps of the data acquisition method performed by the foregoing first interface network element, and the second network element may be configured to perform the steps of the data acquisition method performed by the foregoing second network element.

According to a sixteenth aspect, a data acquisition system is provided, including a first network element, a second interface network element, and a second network element, where the first network element may be configured to perform the steps of the data acquisition method performed by the foregoing first network element, the second interface network element may be configured to perform the steps of the data acquisition method performed by the foregoing second interface network element, and the second network element may be configured to perform the steps of the data acquisition method performed by the foregoing second network element.

According to a seventeenth aspect, a data acquisition system is provided, including a first network element, a first interface network element, a second interface network element, and a second network element, where the first network element may be configured to perform the steps of the data acquisition method performed by the foregoing first network element, the first interface network element may be configured to perform the steps of the data acquisition method performed by the foregoing first interface network element, the second interface network element may be configured to perform the steps of the data acquisition method performed by the foregoing second interface network element, and the second network element may be configured to perform the steps of the data acquisition method performed by the foregoing second network element.

It should be noted that the terms "include", "comprise", or any other variation thereof in this specification are intended to cover a non-exclusive inclusion, so that a process, a method, an object, or an apparatus that includes a list of elements not only includes those elements but also includes other elements that are not expressly listed, or further includes elements inherent to such a process, method, object, or apparatus. In absence of more constraints, an element preceded by "includes a ..." does not preclude the existence of other identical elements in the process, method, article, or apparatus that includes the element. In addition, it should be noted that the scope of the methods and apparatuses in the implementations of this application is not limited to performing functions in the shown or described order, but may also include performing functions in a substantially simultaneous manner or in a reverse order depending on the functions involved. For example, the described method may be performed in an order different from that described, and steps may be added, omitted, or combined. In addition, features described with reference to some examples may be combined in other examples.

According to the foregoing descriptions of the implementations, a person skilled in the art can clearly understand that the methods in the foregoing embodiments may be implemented by using software in combination with a necessary common hardware platform, or certainly may be implemented by using hardware. However, in most cases, the former is a preferred implementation. Based on such an understanding, the technical solutions of this application essentially or the part contributing to the conventional technology may be implemented in a form of a computer software product. The computer software product may be stored in a storage medium (for example, a ROM/RAM, a magnetic disk, or a compact disc), and includes several instructions for instructing a terminal (which may be a mobile phone, a computer, a server, an air conditioner, a network device, or the like) to perform the methods in embodiments of this application.

The foregoing describes embodiments of this application with reference to accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

## Claims

1. A data acquisition method, comprising:
transmitting, by a first network element in a first public land mobile network PLMN, a first request to a second network element in a second PLMN, wherein the first request is used to acquire data generated by a roaming user terminal in the second PLMN and/or a data analytics result generated by the second PLMN for the roaming user terminal, and the roaming user terminal is a user terminal that roams from the first PLMN to the second PLMN or a user terminal that roams from the second PLMN to the first PLMN; and
receiving, by the first network element, a first response transmitted by the second network element for the first request.

2. The method according to claim 1, wherein the first request comprises at least one of the following information:
a first roaming indication, used to indicate that the first request is specific to the roaming user terminal, or indicate that the first request is specific to the user terminal that roams from the first PLMN to the second PLMN or the user terminal that roams from the second PLMN to the first PLMN;
an identifier of the second PLMN, used to indicate a data provider network;
an identifier of a second area in the second PLMN, used to indicate that data and/or a data analytics result corresponding to the roaming user terminal in the second area need to be acquired;
an identifier of the first PLMN, used to indicate a data requester network; and
an identifier of a first area in the first PLMN, used to indicate that the roaming user terminal is located in the first area or comes from the first area through roaming.

3. The method according to claim 2, wherein the first request further comprises at least one of the following information:
information about a target data type, used to indicate a type of data that needs to be acquired and/or a type of a data analytics result that needs to be acquired;
information about a target time period, used to indicate that data that needs to be acquired is data and/or a data analytics result within the target time period; and
user list information, used to indicate the roaming user terminal.

4. The method according to claim 2, wherein the transmitting, by a first network element in a first PLMN, a first request to a second network element in a second PLMN comprises:
transmitting, by the first network element, the first request to the second network element through a first interface network element.

5. The method according to claim 4, wherein before the transmitting, by the first network element, the first request to the second network element through a first interface network element, the method further comprises:
determining, by the first network element based on the identifier of the first PLMN and/or the identifier of the second PLMN, the first interface network element that is in the first PLMN and that corresponds to the second PLMN.

6. The method according to claim 5, wherein each second PLMN corresponds to one first interface network element.

7. The method according to claim 5, wherein the determining, by the first network element based on the identifier of the first PLMN and/or the identifier of the second PLMN, the first interface network element that is in the first PLMN and that corresponds to the second PLMN comprises:
querying, by the first network element based on the identifier of the first PLMN and/or the identifier of the second PLMN, a unified data management UDM network element or a network repository function NRF network element for the first interface network element that is in the first PLMN and that corresponds to the second PLMN.

8. The method according to claim 1, wherein the first response comprises at least one of the following information:
a second roaming indication, used to indicate that the first response is specific to the roaming terminal, or indicate that the first response is specific to the user terminal that roams from the first PLMN to the second PLMN or the user terminal that roams from the second PLMN to the first PLMN;
an identifier of the second PLMN, used to indicate a data provider network;
an identifier of a second area in the second PLMN, used to indicate that data and/or a data analytics result corresponding to the roaming user terminal in the second area are to be acquired;
an identifier of the first PLMN, used to indicate a data requester network; and
an identifier of a first area in the first PLMN, used to indicate that the roaming user terminal is located in the first area or comes from the first area through roaming.

9. A data acquisition method, comprising:
receiving, by a first interface network element in a first PLMN, a first request transmitted by a first network element in the first PLMN, wherein the first request is used to acquire data generated by a roaming user terminal in a second PLMN and/or a data analytics result generated by the second PLMN for the roaming user terminal, and the roaming user terminal is a user terminal that roams from the first PLMN to the second PLMN or a user terminal that roams from the second PLMN to the first PLMN;
processing, by the first interface network element, the first request, and transmitting a processed first request to a second network element in the second PLMN;
receiving, by the first interface network element, a first response transmitted by the second network element for the first request; and
transmitting, by the first interface network element, the first response to the first network element.

10. The method according to claim 9, wherein the first request comprises at least one of the following information:
a first roaming indication, used to indicate that the first request is specific to the roaming user terminal, or indicate that the first request is specific to the user terminal that roams from the first PLMN to the second PLMN or the user terminal that roams from the second PLMN to the first PLMN;
an identifier of the second PLMN, used to indicate a data provider network;
an identifier of a second area in the second PLMN, used to indicate that data and/or a data analytics result corresponding to the roaming user terminal in the second area need to be acquired;
an identifier of the first PLMN, used to indicate a data requester network; and
an identifier of a first area in the first PLMN, used to indicate that the roaming user terminal is located in the first area or comes from the first area through roaming.

11. The method according to claim 10, wherein the processing, by the first interface network element, the first request comprises:
determining, by the first interface network element, user list information based on the identifier of the first area in the first PLMN, wherein the user list information is used to indicate the roaming user terminal, and the roaming user terminal is located in the first area or comes from the first area through roaming; and
adding, by the first interface network element, the user list information to the first request to obtain the processed first request.

12. The method according to claim 9, wherein before the transmitting a processed first request to a second network element in the second PLMN, the method further comprises:
determining, by the first interface network element, a second interface network element in the second PLMN; and
the transmitting a processed first request to a second network element in the second PLMN comprises:
transmitting, by the first interface network element, the processed first request to the second network element through the second interface network element.

13. The method according to claim 10, wherein the determining, by the first interface network element, a second interface network element of the second PLMN comprises:
determining, by the first interface network element based on the identifier of the first PLMN and/or the identifier of the second PLMN, the second interface network element that is in the second PLMN and that corresponds to the first PLMN.

14. The method according to claim 13, wherein each first PLMN corresponds to one second interface network element.

15. The method according to claim 13, wherein the determining, by the first interface network element based on the identifier of the first PLMN and/or the identifier of the second PLMN, the second interface network element that is in the second PLMN and that corresponds to the first PLMN comprises:
querying, by the first interface network element based on the identifier of the first PLMN and/or the identifier of the second PLMN, a UDM network element or an NRF network element for the second interface network element that is in the second PLMN and that corresponds to the first PLMN.

16. A data acquisition method, comprising:
receiving, by a second network element in a second PLMN, a first request transmitted by a first network element in a first PLMN, wherein the first request is used to acquire data generated by a roaming user terminal in the second PLMN and/or a data analytics result generated by the second PLMN for the roaming user terminal, and the roaming user terminal is a user terminal that roams from the first PLMN to the second PLMN or a user terminal that roams from the second PLMN to the first PLMN;
acquiring, by the second network element based on the first request, the data generated by the roaming user terminal in the second PLMN, and/or acquiring the data analytics result generated based on the data generated by the roaming user terminal in the second PLMN; and
transmitting, by the second network element, a first response to the first network element, wherein the first response comprises the acquired data and/or data analytics result.

17. The method according to claim 16, wherein the first request comprises at least one of the following information:
a first roaming indication, used to indicate that the first request is specific to the roaming user terminal, or indicate that the first request is specific to the user terminal that roams from the first PLMN to the second PLMN or the user terminal that roams from the second PLMN to the first PLMN;
an identifier of the second PLMN, used to indicate a data provider network;
an identifier of a second area in the second PLMN, used to indicate that data and/or a data analytics result corresponding to the roaming user terminal in the second area need to be acquired;
an identifier of the first PLMN, used to indicate a data requester network; and
an identifier of a first area in the first PLMN, used to indicate that the roaming user terminal is located in the first area or comes from the first area through roaming.

18. The method according to claim 17, wherein the first request further comprises at least one of the following information:
a target data type, used to indicate a type of data that needs to be acquired and/or a type of a data analytics result that needs to be acquired;
a target time period, used to indicate that data that needs to be acquired is data and/or a data analytics result within the target time period; and
a user list, used to indicate the roaming user terminal.

19. The method according to claim 17, wherein the acquiring, by the second network element based on the first request, the data generated by the roaming user terminal in the second PLMN, and/or acquiring the data analytics result generated based on the data generated by the roaming user terminal in the second PLMN comprises:
determining, by the second network element based on the first roaming indication in the first request, that the roaming user terminal is a user terminal that roams from the first PLMN to the second PLMN or a user terminal that roams from the second PLMN to the first PLMN.

20. The method according to claim 19, wherein the acquiring, by the second network element based on the first request, the data generated by the roaming user terminal in the second PLMN, and/or acquiring the data analytics result generated based on the data generated by the roaming user terminal in the second PLMN further comprises:
in the case of determining that the roaming user terminal is a user terminal that roams from the first PLMN to the second PLMN, determining, by the second network element based on a PLMN identifier comprised in an identifier of a user terminal, whether the user terminal comes from the first PLMN, and by treating a user terminal that comes from the first PLMN as the roaming user terminal, acquiring the data generated by the roaming user terminal in the second PLMN, and/or acquiring the data analytics result generated based on the data generated by the roaming user terminal in the second PLMN.

21. The method according to claim 19, wherein the acquiring, by the second network element based on the first request, the data generated by the roaming user terminal in the second PLMN, and/or acquiring the data analytics result generated based on the data generated by the roaming user terminal in the second PLMN further comprises:
in the case of determining that the roaming user terminal is a user terminal that roams from the first PLMN to the second PLMN, determining, by the second network element based on a PLMN identifier comprised in an identifier of a user terminal, whether the user terminal comes from the first PLMN;
if the user terminal comes from the first PLMN, querying, by the second network element, a UDM in the first PLMN for home area information of the user terminal;
determining, by the second network element based on the home area information, whether the user terminal comes from the first area in the first PLMN; and
by treating a user terminal that comes from the first area in the first PLMN as the roaming user terminal, acquiring, by the second network element, the data generated by the roaming user terminal in the second PLMN, and/or acquiring the data analytics result generated based on the data generated by the roaming user terminal in the second PLMN.

22. The method according to claim 19, wherein the acquiring, by the second network element based on the first request, the data generated by the roaming user terminal in the second PLMN, and/or acquiring the data analytics result generated based on the data generated by the roaming user terminal in the second PLMN further comprises:
in the case of determining that the roaming user terminal is a user terminal that roams from the second PLMN to the first PLMN, querying, by the second network element, a UDM of the second PLMN to learn of a user terminal that is located in the first PLMN or the first area in the first PLMN; and
by treating the user terminal as the roaming user terminal, acquiring, by the second network element, the data generated by the roaming user terminal in the second PLMN, and/or acquiring the data analytics result generated based on the data generated by the roaming user terminal in the second PLMN.

23. The method according to claim 16, wherein the first response comprises at least one of the following information:
a second roaming indication, used to indicate that the first response is specific to the roaming terminal, or indicate that the first response is specific to the user terminal that roams from the first PLMN to the second PLMN or the user terminal that roams from the second PLMN to the first PLMN;
an identifier of the second PLMN, used to indicate a data provider network;
an identifier of a second area in the second PLMN, used to indicate that data and/or a data analytics result corresponding to the roaming user terminal in the second area are to be acquired;
an identifier of the first PLMN, used to indicate a data requester network; and
an identifier of a first area in the first PLMN, used to indicate that the roaming user terminal is located in the first area or comes from the first area through roaming.

24. A data acquisition method, comprising:
receiving, by a second interface network element in a second PLMN, a first request transmitted by a first network element in a first PLMN, wherein the first request is used to acquire data generated by a roaming user terminal in the second PLMN and/or a data analytics result generated by the second PLMN for the roaming user terminal, and the roaming user terminal is a user terminal that roams from the first PLMN to the second PLMN or a user terminal that roams from the second PLMN to the first PLMN;
transmitting, by the second interface network element, the first request to a second network element in the second PLMN;
receiving, by the second interface network element, a first response transmitted by the second network element for the first request; and
transmitting, by the second interface network element, the first response to the first network element.

25. The method according to claim 24, wherein the first request comprises at least one of the following information:
a first roaming indication, used to indicate that the first request is specific to the roaming user terminal, or indicate that the first request is specific to the user terminal that roams from the first PLMN to the second PLMN or the user terminal that roams from the second PLMN to the first PLMN;
an identifier of the second PLMN, used to indicate a data provider network;
an identifier of a second area in the second PLMN, used to indicate that data and/or a data analytics result corresponding to the roaming user terminal in the second area need to be acquired;
an identifier of the first PLMN, used to indicate a data requester network; and
an identifier of a first area in the first PLMN, used to indicate that the roaming user terminal is located in the first area or comes from the first area through roaming.

26. The method according to claim 25, wherein the first request further comprises at least one of the following information:
information about a target data type, used to indicate a type of data that needs to be acquired and/or a type of a data analytics result that needs to be acquired;
information about a target time period, used to indicate that data that needs to be acquired is data and/or a data analytics result within the target time period; and
user list information, used to indicate the roaming user terminal.

27. The method according to claim 25, wherein before the transmitting, by the second interface network element, the first request to a second network element in the second PLMN, the method further comprises:
determining, by the second interface network element, authorization information of the first network element based on the first request, wherein the authorization information is used to indicate that the first network element is authorized to acquire the data generated by the roaming user terminal in the second PLMN and/or the data analytics result generated by the second PLMN for the roaming user terminal.

28. The method according to claim 27, wherein the determining, by the second interface network element, authorization information of the first network element based on the first request comprises:
determining, by the second interface network element, the authorization information of the first network element based on the identifier of the first PLMN and/or the identifier of the first area in the first PLMN in the first request.

29. The method according to claim 28, wherein the determining, by the second interface network element, the authorization information of the first network element based on the identifier of the first PLMN and/or the identifier of the first area in the first PLMN in the first request comprises:
querying, by the second interface network element, a UDM, a network exposure function NEF, or a security edge protection proxy SEPP of the second PLMN for data acquisition authorization information corresponding to the identifier of the first PLMN and/or the identifier of the first area in the first PLMN, wherein the data acquisition authorization information is used to indicate that the first PLMN and/or a network element of the first PLMN is allowed to acquire the data generated by the roaming user terminal in the second PLMN and/or the data analytics result generated by the second PLMN for the roaming user terminal; and
determining, by the second interface network element, the authorization information of the first network element based on the data acquisition authorization information.

30. The method according to claim 26, wherein before the transmitting, by the second interface network element, the first request to a second network element in the second PLMN, the method further comprises:
determining, by the second interface network element, the second network element based on the identifier of the second area in the second PLMN and/or the information about the target data type in the first request.

31. A data acquisition apparatus, comprising:
a transmitting module, configured to transmit a first request to a second network element in a second PLMN, wherein the first request is used to acquire data generated by a roaming user terminal in the second PLMN and/or a data analytics result generated by the second PLMN for the roaming user terminal, and the roaming user terminal is a user terminal that roams from a first PLMN to the second PLMN or a user terminal that roams from the second PLMN to the first PLMN; and
a receiving module, configured to receive a first response transmitted by the second network element for the first request.

32. A data acquisition apparatus, comprising:
a first receiving module, configured to receive a first request transmitted by a first network element in a first PLMN, wherein the first request is used to acquire data generated by a roaming user terminal in a second PLMN and/or a data analytics result generated by the second PLMN for the roaming user terminal, and the roaming user terminal is a user terminal that roams from the first PLMN to the second PLMN or a user terminal that roams from the second PLMN to the first PLMN;
a first transmitting module, configured to process the first request, and transmit a processed first request to a second network element in the second PLMN;
a second receiving module, configured to receive a first response transmitted by the second network element for the first request; and
a second transmitting module, configured to transmit the first response to the first network element.

33. A data acquisition apparatus, comprising:
a receiving module, configured to receive a first request transmitted by a first network element in a first PLMN, wherein the first request is used to acquire data generated by a roaming user terminal in a second PLMN and/or a data analytics result generated by the second PLMN for the roaming user terminal, and the roaming user terminal is a user terminal that roams from the first PLMN to the second PLMN or a user terminal that roams from the second PLMN to the first PLMN;
an acquisition module, configured to acquire, based on the first request, the data generated by the roaming user terminal in the second PLMN, and/or acquire the data analytics result generated based on the data generated by the roaming user terminal in the second PLMN; and
a transmitting module, configured to transmit a first response to the first network element, wherein the first response comprises the acquired data and/or data analytics result.

34. A data acquisition apparatus, comprising:
a first receiving module, configured to receive a first request transmitted by a first network element in a first PLMN, wherein the first request is used to acquire data generated by a roaming user terminal in a second PLMN and/or a data analytics result generated by the second PLMN for the roaming user terminal, and the roaming user terminal is a user terminal that roams from the first PLMN to the second PLMN or a user terminal that roams from the second PLMN to the first PLMN;
a first transmitting module, configured to transmit the first request to a second network element in the second PLMN;
a second receiving module, configured to receive a first response transmitted by the second network element for the first request; and
a second transmitting module, configured to transmit the first response to the first network element.

35. A network-side device, comprising a processor and a memory, wherein the memory stores a program or instructions capable of running on the processor, and when the program or instructions are executed by the processor, the steps of the data acquisition method according to any one of claims 1 to 8 are implemented; or when the program or instructions are executed by the processor, the steps of the data acquisition method according to any one of claims 9 to 15 are implemented; or when the program or instructions are executed by the processor, the steps of the data acquisition method according to any one of claims 16 to 23 are implemented; or when the program or instructions are executed by the processor, the steps of the data acquisition method according to any one of claims 24 to 30 are implemented.

36. A readable storage medium, wherein the readable storage medium stores a program or instructions, and when the program or instructions are executed by a processor, the steps of the data acquisition method according to any one of claims 1 to 8 are implemented; or the steps of the data acquisition method according to any one of claims 9 to 15 are implemented; or the steps of the data acquisition method according to any one of claims 16 to 23 are implemented; or the steps of the data acquisition method according to any one of claims 24 to 30 are implemented.
